# EUROPÄISCHE PATENTSCHRIFT

(11) **EP 2 982 456 B1**
(45) Veröffentlichungstag und Bekanntmachung des Hinweises auf die Patenterteilung: **30.11.2016**
(21) Anmeldenummer: 14002730.1
(22) Anmeldetag: 05.08.2014
(51) Int. Cl.: B21D 28/16, B21K 1/30, B21D 53/28, B23P 15/14, F16D 23/02, B21J 5/12

(54) **Vorrichtung und Verfahren zum Herstellen von für Synchronisationssysteme geeignete mit Zähnen bzw. Zahnabschnitten versehene Kupplungskörper**
Device and method for the production of coupling bodies with teeth and tooth sections suitable for synchronisation systems
Dispositif et procédé de fabrication d'un élément de couplage à dents ou ayant des parties dentées adaptées aux systèmes de synchronisation

(43) Veröffentlichungstag der Anmeldung: 10.02.2016
(73) Patentinhaber: Feintool International Holding AG, 3250 Lyss (CH)
(72) Erfinder: Hofer, Patrick, 3250 Lyss (CH); Schneeberger, Marc, 3250 Lyss (CH); Marti, Andreas, 3303 Jegenstorf (CH)
(74) Vertreter: Cohausz Hannig Borkowski Wißgott

(56) Entgegenhaltungen:
- EP-A1- 2 263 812
- EP-A1- 2 561 938
- EP-B1- 1 003 619
- EP-B1- 2 512 706
- DE-A1- 2 222 080

## Beschreibung

Die Erfindung betrifft eine Vorrichtung zum Herstellen von für Synchronisationssysteme geeignete mit Zähnen bzw. Zahnabschnitten versehene Kupplungskörper aus einem Zuschnitt mit mindestens einer aus Prägesegmenten und Ambos zusammengesetzten Prägestufe zum Prägen von Dächern und Senken zwischen Fuß- und Kopfkreis in eine Oberseite der Zuschnitts und ein Transfermittel zum Transportieren der Zuschnitte gemäß dem Oberbegriff des Anspruchs 1.

Die Erfindung betrifft weiterhin ein Verfahren zum Herstellen von für Synchronisationssysteme geeignete Kupplungskörper aus einem Zuschnitt mit einer mindestens Prägesegmente und einen Ambos enthaltenden Prägestufe, in der ringartig aneinandergereihte Senken und Dächer im umfangsnahen Randbereich unmittelbar in die Oberseite des Zuschnitts durch Prägen entlang eines Fuß- und Kopfkreises der zukünftigen Zähne bzw. Zahnabschnitte eingebracht werden eingebracht werden gemäß dem Oberbegriff des Anspruchs 13.

### Stand der Technik

Aus der gattungsbildenden EP 2 263 812 A1 ist ein Verfahren zur Herstellung von Stanzteilen, insbesondere von Synchronringen, Kupplungskörpern oder Kupplungsscheiben bekannt, bei dem in einem Verfahrensschritt das zu bearbeitende Bandmaterial zwischen die Niederhalter eines Feinschneidwerkzeugs geklemmt und in einem weiteren Verfahrensschritt wenigstens die Zähne geprägt werden. In einem ersten Prozessschritt wird ein Fließvorprägen im Bandmaterial mindestens im Bereich der später auszuschneidenden Zähne ausgeführt und daran anschließend der Verfahrensschritt des Feinschneidens in Verbindung mit einem Fließpressen in dem Bandmaterial ausgeführt. Die Zähne werden mit einem Feinschneidvorgang geformt und gleichzeitig einem Fließpressen unterworfen und dabei in ein freies durch Vorprägen geschaffenes Volumen hinein verdrängt.
Durch das Fließvorprägen, das nichts anderes als ein Prägen ist, erzwingt eine Änderung der Form des Bandmaterials unter Beibehaltung des Stoffzusammenhanges und des Stoffvolumens.
Dies ist mit dem Nachteil verbunden, dass im Prägebereich des Bandmaterials durch die Form- und Geometrieänderungen Spannungen bzw. Verfestigungen entstehen, die die Planheit des zu schneidenden Bandes und die Abmessungsgenauigkeit der späteren Zähne beeinträchtigen kann.

Des Weiteren ist in der DE 2 222 080 A1 ein Verfahren und ein Gesenk zur Herstellung von Kupplungskörpern für Synchrongetriebe mit Zähnen beschrieben, die ein Zahnprofil mit flankenseitig dachartigen Aufschubflächen und stirnseitig unter Bildung von Anschlagnasen abgestuften Kopfflächen zum Einrasten einer zugeordneten Schaltmuffe aufweisen. Die Zähne werden zunächst feingestanzt und dann wird das Zahnprofil formgeprägt. Dazu werden die gestanzten Zähne jeweils in einem Gesenk mit einer dem Zahnprofil entsprechenden Hohlform vorgeprägt und anschließend bei geschlossenem Gesenk mittels eines in die Hohlform eingefahrenen Verdrängerstempels unter Auffüllen der Hohlform fertig geprägt.
Dieses bekannte Verfahren ist sehr aufwändig, da die Zähne nacheinander dem Gesenk zugeführt oder jedem Zahn ein eigenes Gesenk zugeordnet werden muss. Außerdem müssen die Zähne im Untermaß gestanzt werden, damit eine einwandfreie Füllung der Hohlform mit den verlangten Feinabmessungen erreicht wird.

### Aufgabenstellung

Bei diesem Stand der Technik liegt der Erfindung die Aufgabe zugrunde, eine Vorrichtung und ein Verfahren zum Herstellen von für Synchronisationssysteme geeignete mit Zähnen bzw. Zahnabschnitten versehene Kupplungskörper zur Verfügung zu stellen, die Formen- und Abmessungstreue sowie die Präzision von Kupplungskörpern bei gleichzeitiger Erhöhung der Wirtschaftlichkeit unter Vermeidung von Nacharbeiten deutlich zu verbessern.

Diese Aufgabe wird durch eine Vorrichtung der eingangs genannten Gattung mit den Merkmalen des Anspruchs 1 und durch ein Verfahren mit den Merkmalen des Anspruchs 13 gelöst.

Vorteilhafte Ausgestaltungen der Vorrichtung und des Verfahrens sind den Unteransprüchen entnehmbar.

Die erfindungsgemäße Lösung geht von der Erkenntnis aus, die durch das Vorprägen erzeugte Form- und Geometrieänderung zu vermeiden und einen planen Zuschnitt mit weitgehender Spannungsfreiheit für die nachfolgende Zahnherstellung zu erreichen.
Dies wird dadurch ermöglicht, dass die Prägesegmente einen ersten Abschnitt und die Prägesegmente einen zweiten Abschnitt zum sequentiellen Prägen innerhalb der Prägestufe bilden, wobei die Prägesegmente zuerst den Abschnitt prägen, dann gegenüber den Prägesegmenten zurücklaufen und sodann die Prägesegmente den Abschnitt prägen, wobei die Prägesegmente nebeneinander in einer gemeinsamen Ringanordnung angeordnet sind sowie die Prägesegmente relativ axial beweglich gegenüber den Prägesegmenten des ersten Abschnitts ausgebildet sind, und dass die Vorrichtung weiterhin umfasst
a) eine Beschneidestufe zum Freischneiden der Senken zur Ausbildung von stirnseitig am Zuschnitt aufragenden Zahnkörpern mit Zahnflanken und Dächern und
b) eine Hinterlegungs- und Kalibierstufe zum Hinterlegen der Zahnflanken und zum Kalibrieren der Dächer des Zahnkörpers in die Endform durch Prägestempel und einen mit den Prägestempeln zusammenwirkenden Kalibrierambos.

Nach einer bevorzugten Ausgestaltung der erfindungsgemäßen Vorrichtung bilden die Dächer mit Senken des ersten Abschnitts und zweiten Abschnitts einen gemeinsamen Umformbereich bilden, der zwischen Kopf- und Fußkreis der zukünftigen Zähne randnah im Zuschnitt angeordnet ist.
Das sequentielle abgestufte Einbringen von Dächern und Senken im randnahen Bereich des Zuschnitts gewährleistet ein gleichmäßiges Abfließen des durch das Prägen verdrängten Materialvolumens in Richtung Rand des Zuschnitts und vermeidet Unebenheiten der Platine.

In weiterer Ausgestaltung der Erfindung bilden der der erste Abschnitt von Prägesegmenten durch das 1.-, 3.-, 5.- und n.-Prägesegment und der zweite Abschnitt von Prägesegmenten durch das 2.-, 4.-, 6-, und n-1.-Prägesegment die Ringanordnung, deren Durchmesser dem Kopfkreis der zukünftigen Zähne entspricht, wobei die Prägesegmente des ersten Abschnittes durch mindestens ein Füllstück auffüllbar ist, so dass Kupplungskörper mit verschiedener Zahnanzahl und Konfiguration ausgebildet werden können.

Nach einer weiteren Ausführungsform der Erfindung weisen die Prägesegmente des ersten und zweiten Abschnitts einen Schaft mit Prägefuß auf, der Prägeflächen mit gleichen Formen und Abmessungen und einen Dachfirst besitzt, wobei der Dachfirst senkrecht zum Fußkreis und Kopfkreis ausgerichtet ist.

In weiterer Ausgestaltung der erfindungsgemäßen Vorrichtung ist der Schaft der Prägesegmente des ersten und zweiten Abschnitts mit einem hammerkopfähnlich trapezoid-ausgebildeten Kopf versehen, der gegenüber dem Schaft vorsprungartige Schultern aufweist, wobei die Schultern der beweglichen Prägesegmente die Axialbewegung auf der inneren unteren Halteplatte begrenzen und der Kopf von am äußeren Umfang der inneren oberen Halteplatte eingebrachte, durch Zähne beabstandete Ausnehmungen seitlich geführt ist, und die Schultern der festen Prägesegmente auf den Zähnen der inneren oberen Halteplatte im Kraftschluss durch eine Druckplatte gehalten ist, so dass die festen Prägesegmente gegenüber den beweglichen Prägesegmenten fixiert sind.

Von Vorteil ist weiterhin, dass jedem der beweglichen Prägesegmente des Abschnitts zur Übertragung der Axialbewegung ein Druckstück zugeordnet ist, das mit einem Druckstückring in Wirkverbindung steht, auf welchem Druckbolzen gleichmäßig verteilt angeordnet sind, von denen mehrere Druckbolzen zu einer Gruppe unter eine gemeinsame Brücke zusammengefasst sind, die jeweils über ein Druckstück den Kraftschluss zu den Prägesegmenten aufrechterhalten.

In einer bevorzugten weiteren Ausgestaltung der erfindungsgemäßen Vorrichtung sind in der Beschneidestufe zumindest ein Schneidstempel, eine Schneidplatte und ein Ausstoßer vorgesehen deren Geometrie an die Zahnflankenform der zukünftigen Zähne angepasst ist.
In der Beschneidestufe wird sichergestellt, dass die Senken zwischen Fuß- und Kopfkreis soweit von Material freigeschnitten werden, dass jeweils zwei benachbart liegende Dächer mit den jeweiligen Schnittflächen des 1. Abschnitts und 2. Abschnitts einen Zahnkörper an der Stirnseite der Platine bilden können, ohne dass ein aufwändiges Umformen/Fließpressen erforderlich wird, so dass keine durch Umformen erzeugte Spannungen in den Zahnbereich des Zuschnitts eingebracht werden.

Nach einer weiteren bevorzugten Ausführungsform der erfindungsgemäßen Vorrichtung ist für das Hinterlegen und Kalibrieren des freigeschnittenen Zahnkörpers in der Hinterlegungs- und Kalibrierstufe ein hülsenartig ausgebildetes Prägesenk vorgesehen, das an seiner inneren Wandung mit zur Gesenkachse parallel angeordneten, zwischen Fuß- und Kopfkreis gelegene Ausnehmungen versehen ist, die so positioniert sind, dass sie jeweils den freigeschnittenen Senken zugeordnet sind, wobei in den Ausnehmungen Prägestempel angeordnet sind, die einen sich in Bewegungsrichtung im Querschnitt konisch vergrößernden Schaft zur Hinterlegung der Zahnflanken des Zahnkörpers und einen dachartig ausgebildeten Kopf zur Kalibrierung der Dachform aufweisen, und dass ein Kalibrierambos vorgesehen ist, dessen Kalibrierfläche an die Dachform und -geometrie der Zähne angepasst ist.

In weiterer bevorzugter Ausgestaltung der Erfindung sind die Prägestempel durch einen im Prägegesenk senkrecht zur Gesenkachse angeordneten, übereinander liegenden scheibenförmigen Gegenhalter und Halteplatten radial gehalten, wobei die Prägestempel eine Stützseite aufweisen, die der Stirnseite von Gegenhalter und Halteplatten zugewandt sind.

Weiterhin ist in einer bevorzugten Ausführungsform der Erfindung den Prägestempeln fußseitig ein Druckstückring zugeordnet, der im Kraftschluss mit einer Matrizendruckplatte durch Druckbolzen gehalten ist, so dass die Zahnflanken in die gewünschte Endform- und - geometrie gebracht werden können.
Die Prägestempel weisen dazu eine an die Zahnflankenform angepasste prismatische langgestreckte Form auf, wobei die Stützseite mit Vorsprüngen zur Auflage bzw. zum Halten der Halteplatten und des Gegenhalters versehen ist.

Die Aufgabe wird weiter durch ein Verfahren gelöst, das folgende Schritte umfasst:
a) Einbringen von Dächern und Senken durch ein erstes Prägen, bei dem die Dächer mit Senken voneinander in einem gleichen Abstand in einer Ringanordnung positioniert sind, und durch ein dem ersten Prägen nacheilendes zweites Prägen von Dächern und Senken, bei dem die Abstände in der Ringanordnung mit Dächer und Senken gefüllt werden, wobei das erste Prägen und zweite Prägen in einer einzigen Prägestufe ausgeführt werden,
b) Beschneiden der Senken zum Entfernen eines Materialbereichs an jeweils ihren tiefsten Punkten, so dass an der Stirnseite der Platine Zahnkörper entlang des Fußkreises mit Zahnflanken und Dächern ohne Prägen entstehen,
c) Hinterlegen der Zahnflanken durch ein Prägen mit Prägestempeln und Kalibrieren der Dachform der Dächer mit einem an die Dachform angepassten Kalibrierambos.

Weitere Vorteile, Merkmale und Einzelheiten der Erfindung ergeben sich aus der nachfolgenden Beschreibung unter Bezugnahme auf die beigefügten Zeichnungen.

### Ausführungsbeispiel

Die Erfindung soll nachstehend am Beispiel der Herstellung eines Kupplungskörpers mit Außenverzahnung näher erläutert werden. Es versteht sich, dass durch die Erfindung ebenso Synchronisationsteile, Teile mit dachförmigen Zähnen oder Kupplungsteile erfasst sind.

### Es zeigen

Fig. 1a und 1b zeigen Ansichten eines herkömmlichen Kupplungskörpers,
Fig. 2a bis 2f eine schematische Darstellung des Ablaufs der Herstellung des Kupplungskörpers nach dem erfindungsgemäßen Verfahren,
Fig. 3 eine perspektivische Ansicht der Prägestufe der erfindungsgemäßen Vorrichtung,
Fig. 4a eine perspektivische Darstellung der Prägestufe mit Führungsplatte in Unteransicht ohne oberen Block,
Fig. 4b eine perspektivische Darstellung der Prägestufe mit Führungsplatte in Draufsicht ohne oberen Block,
Fig. 4c eine Explosionsdarstellung gemäß Fig. 4b,
Fig. 5 und 6 Ringanordnungen der festen und beweglichen Prägesegmente der Prägestufe,
Fig. 7 eine perspektivische Darstellung der äußeren Führung der Prägesegmente in Explosionsansicht,
Fig. 8 einen Schnitt entlang der Linie A-A in Fig. 7,
Fig. 9a eine perspektivische Darstellung der inneren Führung der beweglichen Prägesegmente,
Fig. 9b eine Schnittdarstellung der Befestigung der festen Prägesegmente,
Fig. 10a und 10b perspektivische Ansichten eines festen und eines beweglichen Prägesegment,
Fig. 11 eine perspektivische Darstellung eines Beispiels einer gleichmäßigen Druckbeaufschlagung der beweglichen Prägesegmente mit Füllstück,
Fig. 12 eine perspektivische Darstellung der Baugruppe des Prägeambos der Prägestufe am unteren Block der erfindungsgemäßen Vorrichtung,
Fig. 13 eine perspektivische Ansicht der Hinterlegungs- und Kalibrierstufe der erfindungsgemäßen Vorrichtung,
Fig. 14 eine perspektivische Ansicht der Matrizenseite der Hinterlegungs- und Kalibrierstufe am unteren Block der erfindungsgemäßen Vorrichtung,
Fig. 15 eine perspektivische Darstellung des Prägegesenks der Hinterlegungs- und Kalibrierstufe ohne oberen Block,
Fig. 16 eine Ansicht eines Prägestempels,
Fig. 17 einen Schnitt gemäß Linie B-B der Fig. 14,
Fig. 18 eine Detailansicht der inneren Führung der Prägestempel und
Fig. 19 eine Schnittdarstellung des Ambos auf der Stempelseite und des Gesenks auf der Matrizenseite.

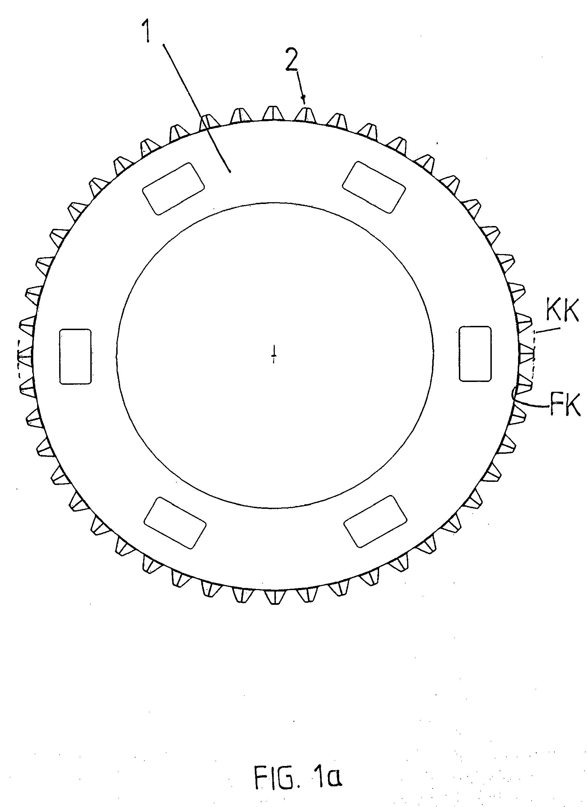

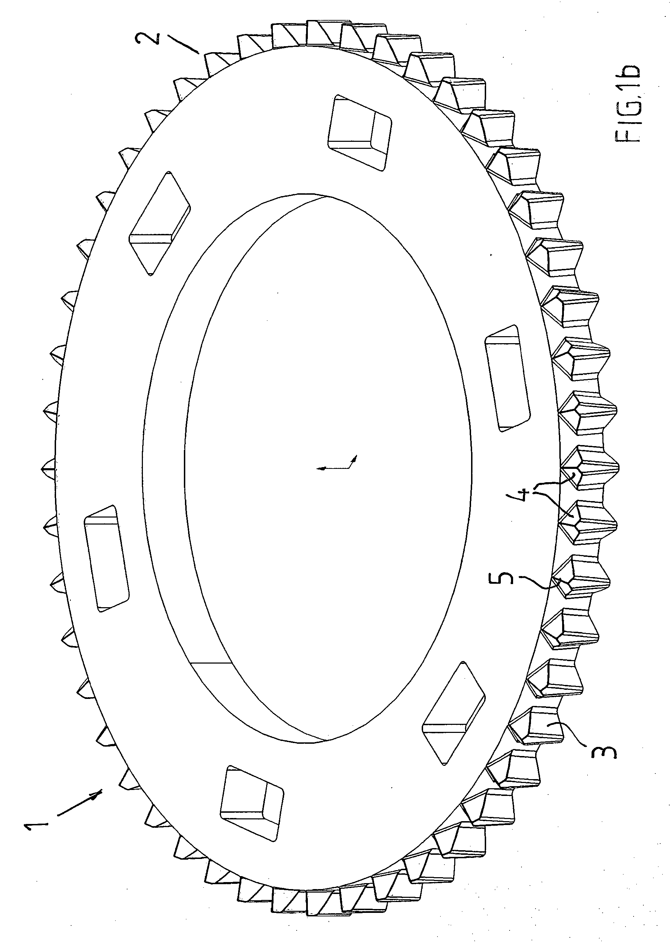

Die Fig. 1a und 1b zeigen ein Beispiel eines Kupplungskörpers 1 für Synchrongetriebe. Dieser Kupplungskörper besitzt eine Verzahnung mit Zähnen 2, die hinterlegte Zahnflanken 3, Dachflächen 4, die einem First 5 zusammenlaufen und eine abgeflachte Kopffläche 6 (siehe Fig. 1b) aufweisen. In die Fig. 1a sind der Kopfkreis KK und der Fußkreis FK der Zähne kenntlich gemacht.

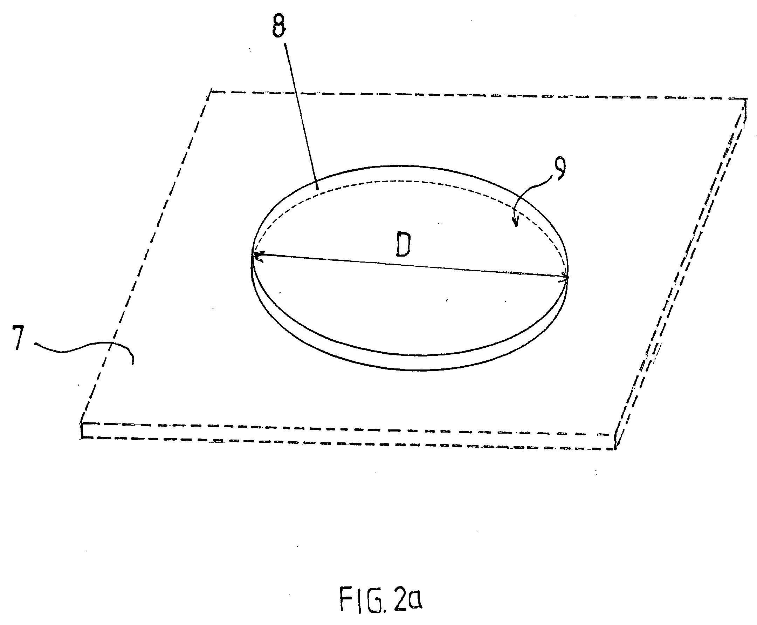

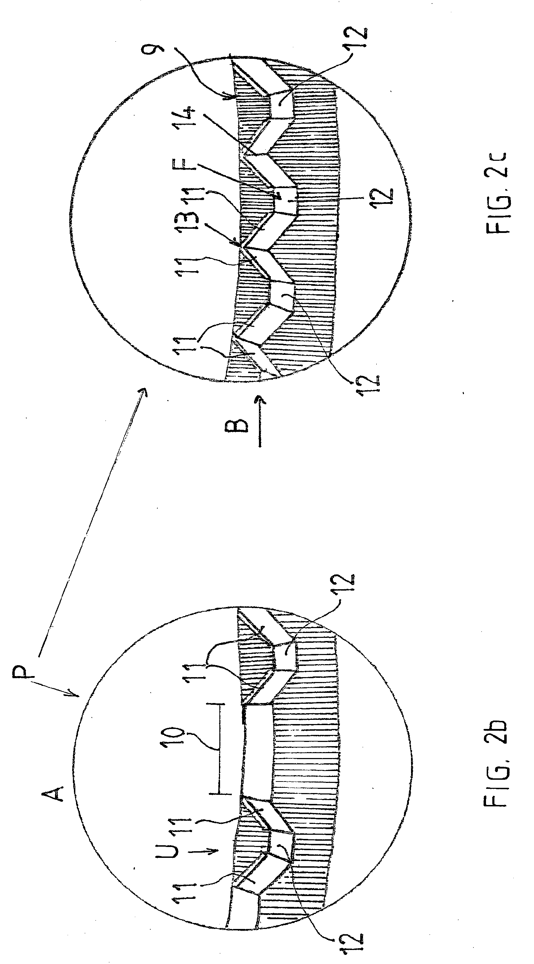

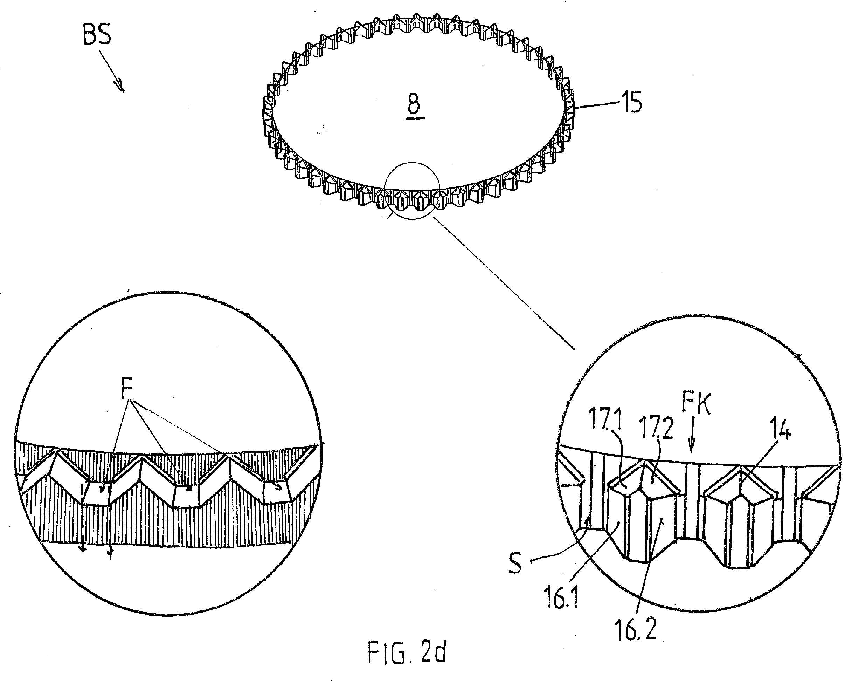

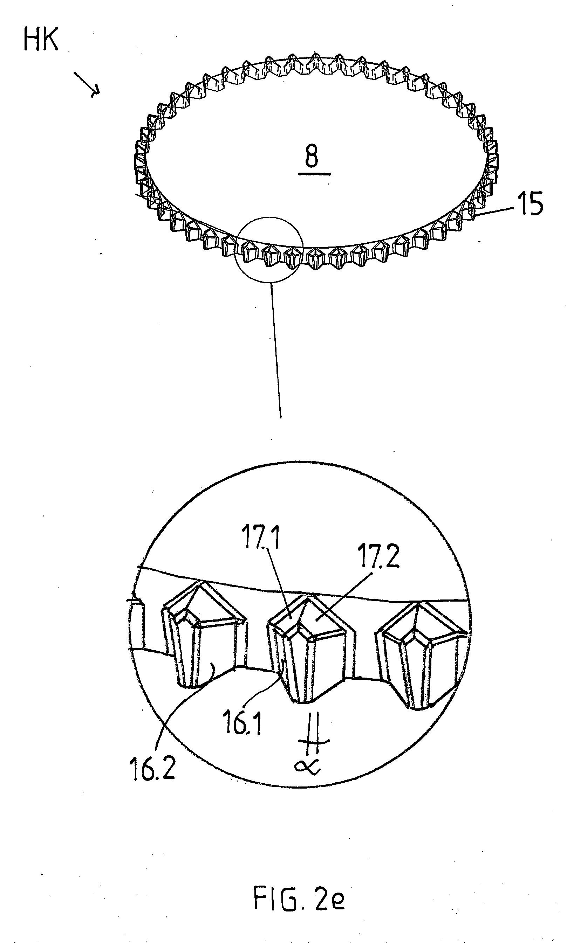

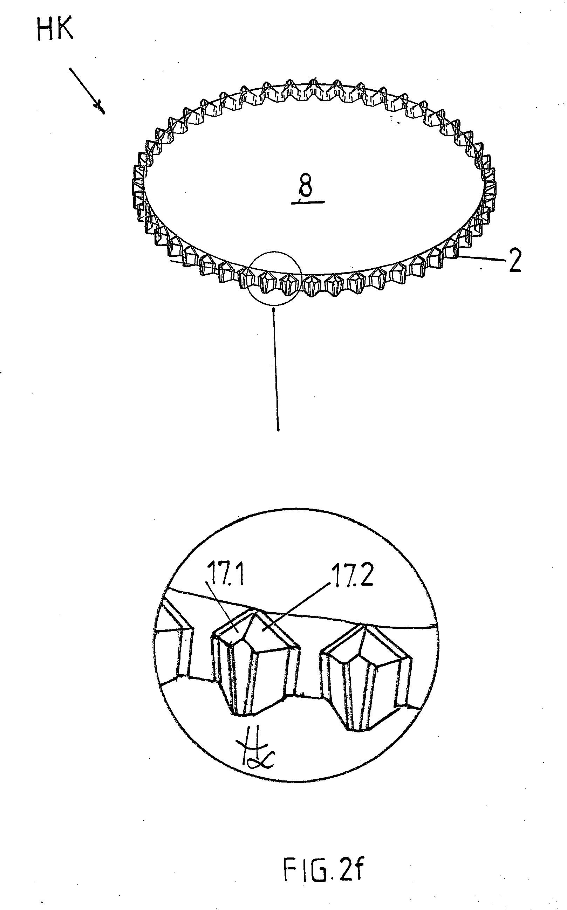

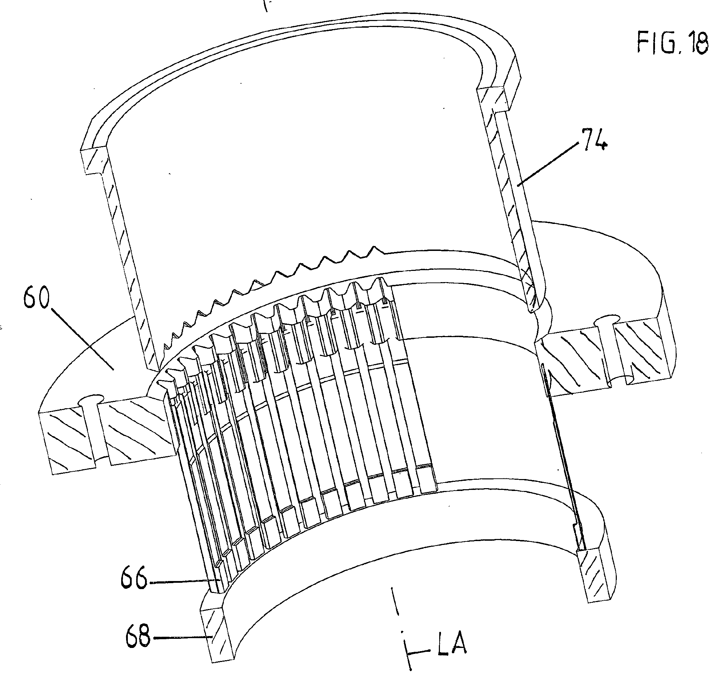

Die Fig. 2a bis 2f zeigen den grundsätzlichen Ablauf des erfindungsgemäßen Verfahrens zur Herstellung eines derartigen Kupplungsköpers.
In einem ersten Schritt (siehe Fig. 2a) wird aus einem Bandstreifen 7 ein Zuschnitt 8 ausgeschnitten, wobei der Durchmesser D des Zuschnitts 8 ein Untermaß hat, das auf die Formänderung durch das Prägen eingestellt ist. Das Ausschneiden erfolgt mit einem bekannten Feinschneidwerkzeug, das im Wesentlichen ein Oberteil mit Führungs- oder Ringzackenplatte, einen Schneidstempel und Ausstoßer sowie ein Unterteil mit Schneidplatte und Auswerfer aufweist. Eine weitergehende Darstellung kann daher entfallen.
Der Zuschnitt 8 wird durch ein weiter nicht dargestelltes Transfermittel dem nächsten Prozessschritt, der Prägestufe P, zugeführt, in dem im randnahen Bereich der Oberseite 9 des Zuschnitts 8 zwischen dem Kopfkreis KK und dem Fußkreis FK in einem ersten Prägeschritt Dächer 11 eingeprägt werden, die durch Abstände 10 voneinander entfernt sind. Die aneinander liegenden Dächer 11 laufen jeweils in Senken 12 zusammen, wobei die Abstände 10 so dimensioniert sind, dass ihre Länge 1 und Breite b zweier zusammenlaufender Dächer 11 entsprechen.
In einem den ersten Prägeschritt nacheilenden zweiten Prägeschritt werden die Abstände 10 durch weitere mit Senken 12 verbundene Dächer 11 versehen (siehe Fig. 2b). Es entsteht ein entlang des randnahen Bereiches in sich geschlossener aufrecht in Richtung Oberseite des Zuschnitts 8 ausgerichteter zahnkranzähnlicher Umformbereich, wobei die Zahnspitzen 13 beim Schließen der Abstände 10 aus einem im ersten Prägeschritt erzeugten Dach 11 und einem im zweiten Prägeschritt geprägten Dach 11 gebildet werden und der First 14 der Dächer 11 in der Ebene der Oberseite des Zuschnitts 8 liegt und vom Fußkreis FK begrenzt wird. Das Besondere des sequentiellen Prägens des ersten und zweiten Abschnitts besteht darin, dass beide Prägeschritte in einer einzigen Umformstufe P ablaufen.
Die Lage und Form des zahnkranzähnlichen Umformbereiches U ist in der Fig. 2c gezeigt. Es ist deutlich zu erkennen, dass der First 14 durch das Aneinanderstoßen des im ersten Prägeabschnitt erzeugten Daches 11 mit einem im zweiten Prägeabschnitt erzeugten Dach 11 entsteht. Die Senken 12 stellen jeweils den tiefsten Bereich der aneinandergrenzen Dächer 11 dar, der durch eine gegenüber der Oberseite des Zuschnitts 8 parallel angeordnete Fläche F gebildet wird. Im nachfolgenden Prozessschritt -der Beschneidestufe B (siehe Fig. 2d) - wird das unterhalb der Fläche F gehörende Material des Umformbereichs U freigeschnitten, so dass entlang des Fußkreises FK an der Stirnseite S des Zuschnitts 8 Zahnkörper 15 ohne Prägen entstehen. Die Zahnkörper 15 werden durch die Zahnflanken 16.1 bzw. 16.2 und im First 14 zusammenlaufende Dachflächen 17.1 bzw. 17.2 gebildet.
Im Prozessschritt der Hinterlegungs- und Kalibrierstufe HK (siehe Fig. 2e und 2f) werden in einem ersten Teilschritt die Zahnflanken 16.1 und 16.2 benachbart liegender Zahnkörper 15 durch einen Präge- oder Hinterlegungsstempel 63 (siehe Fig. 18) umgeformt, der die Zahnflanken 16.1 und 16.2 in einem Winkel α von beispielsweise 5° hinterlegt. Die Dachflächen 17.1 und 17.2 werden dann in einem zweiten Teilschritt durch einen an die zukünftige Dachform angepassten Kalibrierambos 74 (siehe Fig. 18) kalibriert, so dass die endgültige Zahnform am Zahnkörper 1 entsteht.

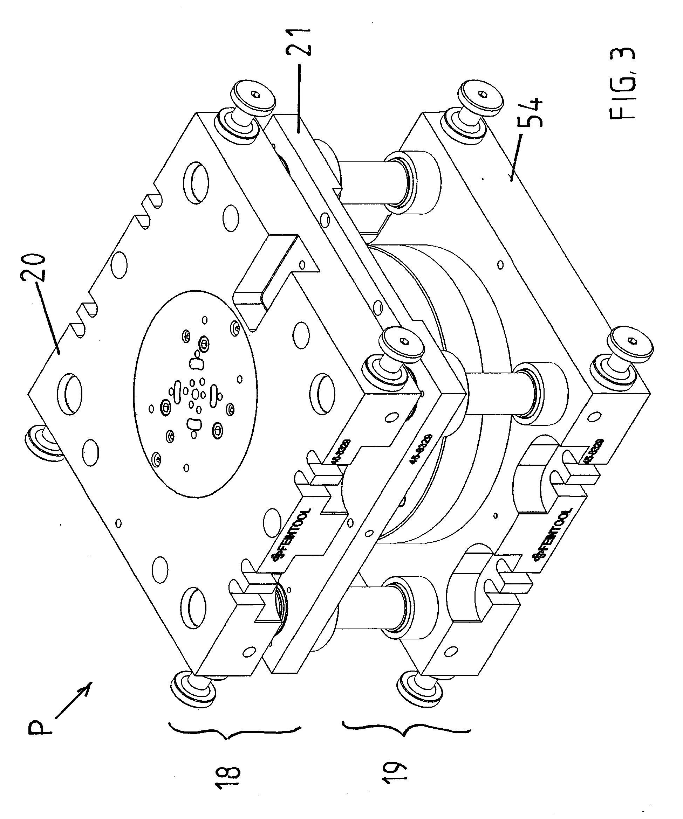

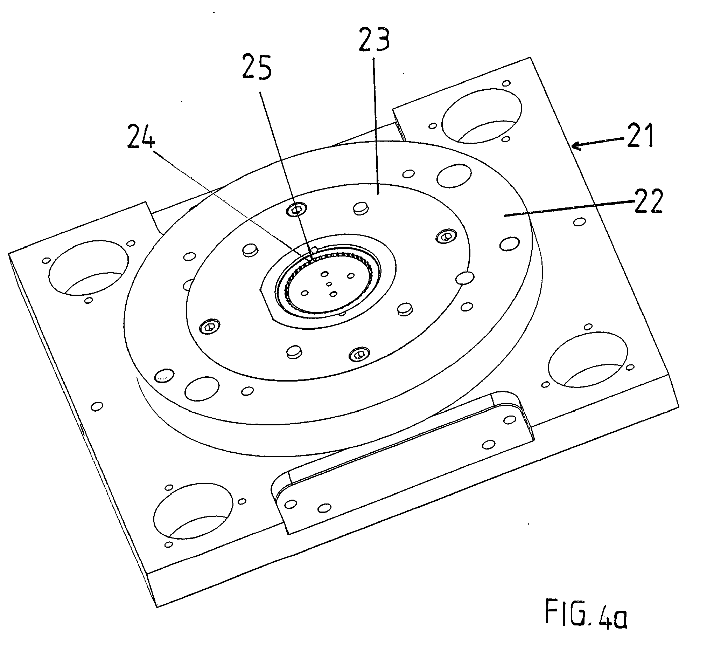

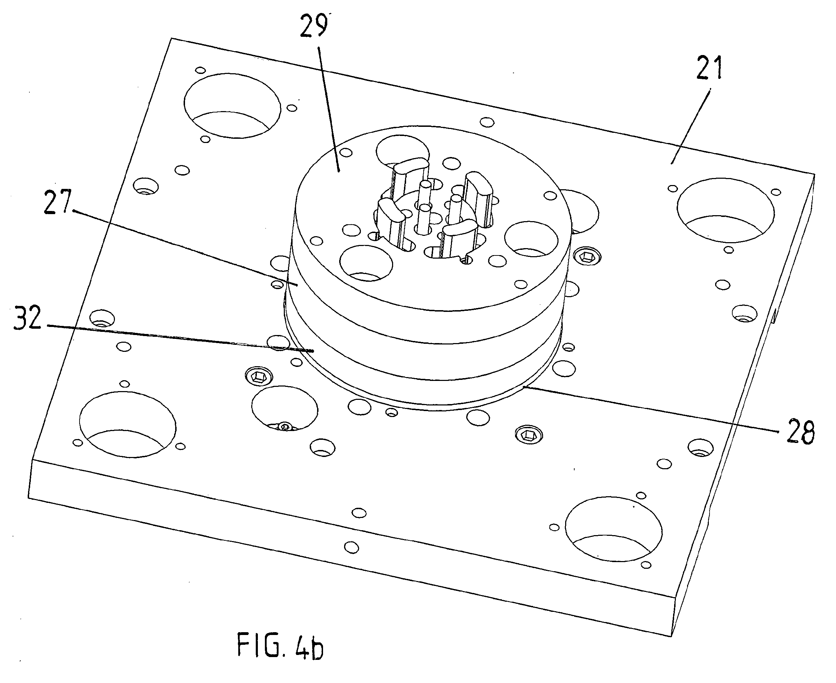

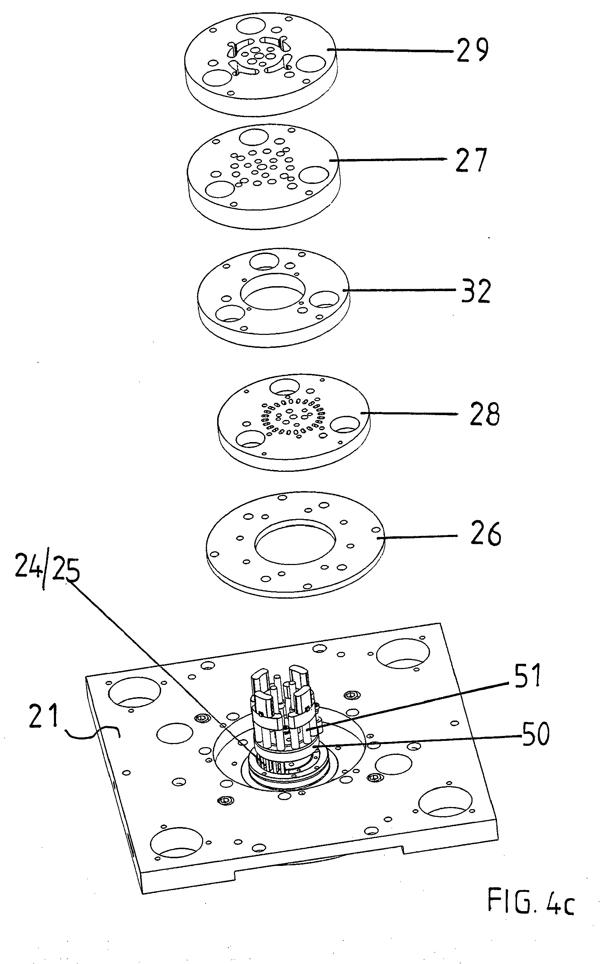

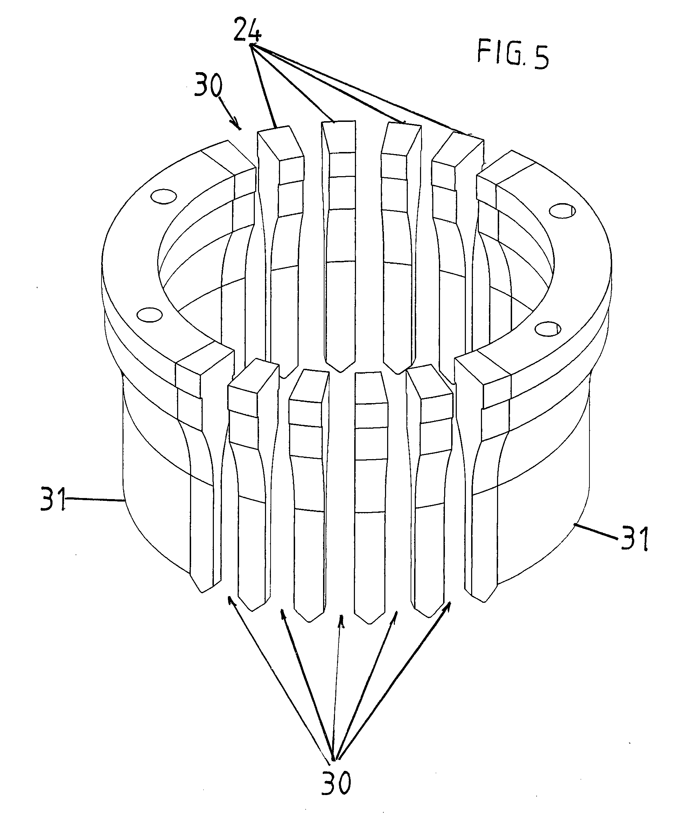

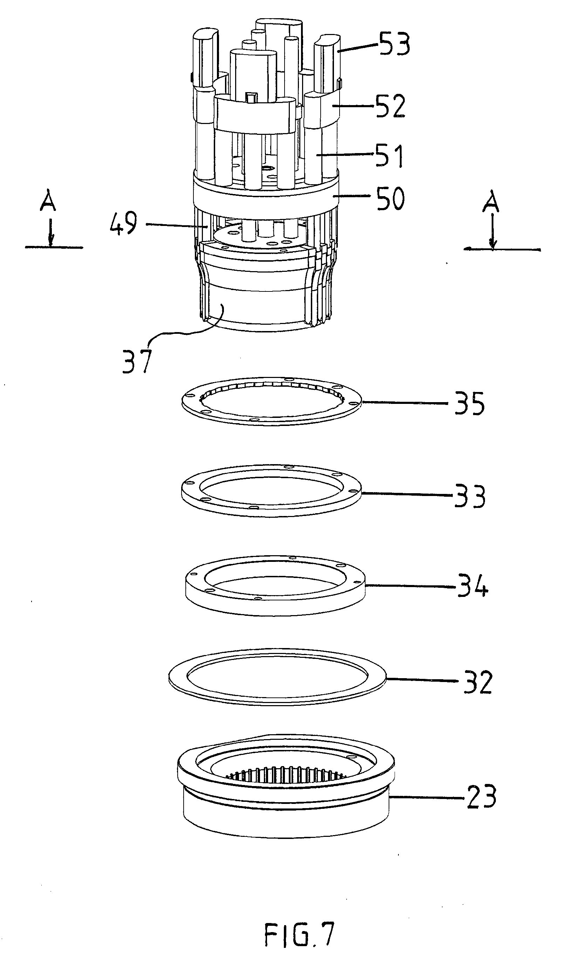

Es wird jetzt auf die Fig. 3 bis 12 Bezug genommen. Die Fig. 3 zeigt die perspektivische Ansicht der Prägestufe P der erfindungsgemäßen Vorrichtung. Die Prägestufe P umfasst ein Oberteil 18 und ein Unterteil 19. Zum Oberteil 18 gehören ein oberer Block 20 und eine Führungsplatte 21, an deren Unterseite eine Führung 22 mit Führungseinsatz 23 zum Führen und Halten von aktiven Wirkelementen vorgesehen ist (siehe Fig. 4a bis 4c und Fig. 7). Im Führungseinsatz 23 befindet sich eine Ringanordnung von einzelnen Prägesegmenten 24 und 25, auf die in Fig. 5 näher eingegangen wird. Die Baugruppe der Prägesegmente 24 und 25 wird an Führungsplatte 21 durch eine Führungshalteplatte 26, eine Druckplatte 27, einen Distanzring 32, eine untere Druckplatte 28 und einer Zwischenplatte 29 gehalten.

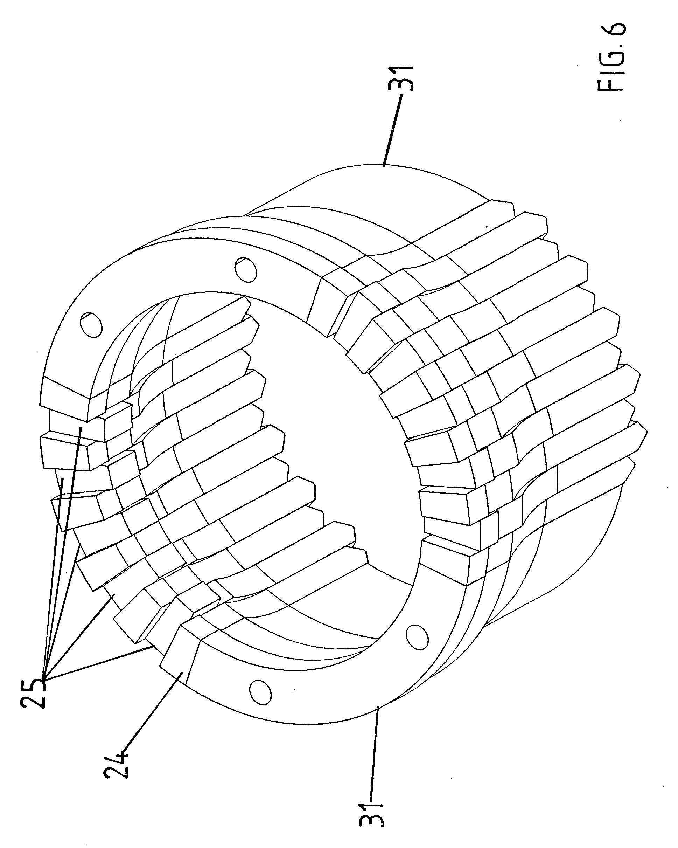

Die Fig. 5 und 6 stellen die Ringanordnung der Prägesegmente 24 und 25 dar. Die Prägesegmente 24 sind gegenüber den Prägesegmenten 25 fest und zueinander durch Lücken 30 versetzt angeordnet. In die Lücken 30 sind - wie Fig. 6 zeigt - die Prägesegmente 25 eingesetzt, die gegenüber den Prägesegmenten 24 axial verschiebbar ausgeführt sind. Die Lücken 30 haben Abmessungen, die auf die Breite b und Länge 1 der Dächer des Umformbereiches U abgestimmt sind. Die Anzahl der Prägesegmente 24 und 25 in der Ringanordnung richtet sich nach der Anzahl der am Kupplungskörper 1 gewünschten Zähne 2. Werden nur Zahnabschnitte an der Peripherie des Kupplungskörpers 1 benötigt, wird die Ringanordnung -wie Fig. 6 verdeutlicht- durch Füllstücke 31 aufgefüllt.

In Fig. 7 ist die äußere untere Führung der Ringanordnung der Prägesegmente 24 und 25 in Explosionsdarstellung gezeigt, die aus dem Führungseinsatz 23, Distanzringen 32, 33 einer äußeren mittleren Halteplatte 34 und einer äußeren oberen Halteplatte 35 gebildet wird. Der Führungseinsatz 23 und die obere Halteplatte 35 sind an ihren den Prägesegmenten 24 und 25 zugewandten Wandabschnitten mit axial verlaufenden nutenförmigen Bereichen für die Prägesegmente 24 und 25 versehen.

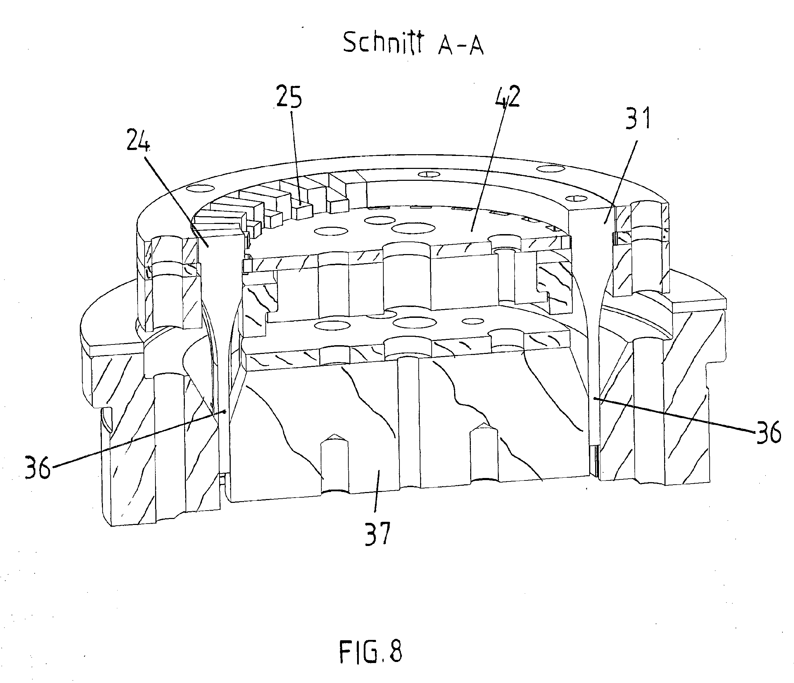

Die Fig. 8 verdeutlicht die innere Führung der Prägesegmente 24 und 25 an einem Schnitt entlang der Linie A-A in Fig. 7. Die Prägesegmente 24 und 25 werden entlang ihres Schaftes 36 innenseitig durch den Ausstoßer 37 geführt.

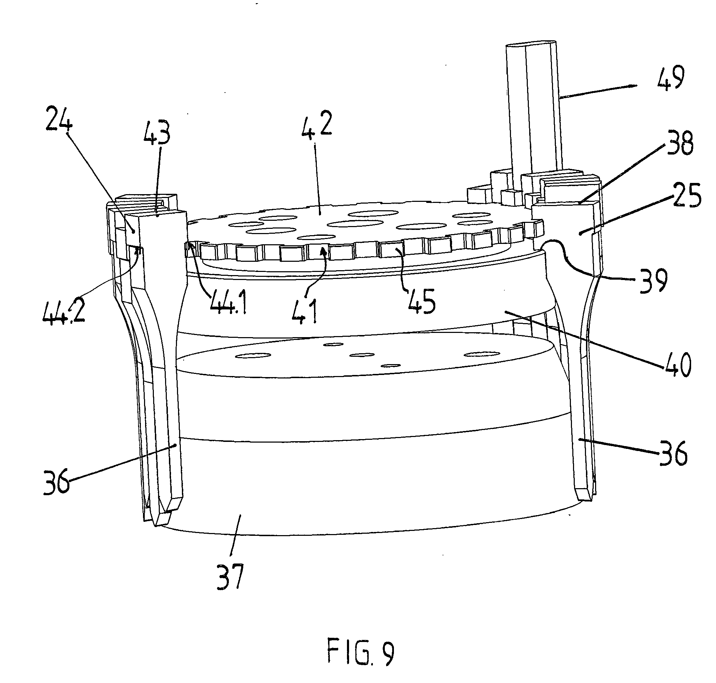

Wie aus den Fig. 9 zu ersehen ist, liegt das axial verschiebbare Prägesegment 25 mit seiner am Kopf 38 gegenüber dem Schaft 36 ausgebildeten Schulter 39 auf einem dem Ausstoßer 37 zugeordneten Ring 40 in seiner unteren Endlage auf. Die Schulter 39 begrenzt somit wie ein Anschlag die Axialbewegung. Der Kopf 38 des Prägesegments 25 liegt dabei in den zahnkranzartig ausgebildeten Ausnehmungen 41 der inneren Halteplatte 42 ein, so dass das Prägesegment 25 bei seiner Axialbewegung radial gesichert ist. Die Prägesegmente 24 liegen einerseits mit einer am jeweiligen Kopf 43 ausgebildeten inneren Schulter 44.1 auf den Zähnen 45 der inneren Halteplatte 42 auf und werden andererseits von der äußeren Halteplatte 35 an der äußeren Schulter 44.12 des Kopfes 43 gesichert, wobei sich die Prägesegmente 24 mit ihrer Kopffläche an der Druckplatte 27 abstützen, so dass die Prägesegmente 24 festliegen und nur bei Abwärtsbewegung des oberen Blockes 20 ihre Prägebewegung ausführen können (siehe Fig. 9b). Die Köpfe 43 der Prägesegmente 24 stehen gegenüber den Köpfen 38 der Prägesegmente 25 um ein gewisses Maß über, das auf den Axialweg der Prägesegmente 25 abgestimmt ist, so dass zunächst alle beweglichen Prägesegmente 25 des Abschnitts B in Eingriff mit dem auf einem Prägeambos 57 abgestützten Zuschnitt 8 gelangen und nachfolgend alle festen Prägesegmente 24 des Abschnitts A. Mit anderen Worten die beweglichen Prägesegmente 25 bilden in der Ringanordnung einen gemeinsamen Abschnitt B aus dem 2.-, 4.-, 6.- bis n. Prägesegment der Prägesegmente 25 und die festen Prägesegmente 24 einen gemeinsamen Prägeabschnitt A aus dem 1.-, 3.-, 5.- bis n-1.-Prägesegment der Prägesegmente 24. Die festen und beweglichen Prägesegmenten 24 bzw. 25 können eine vollkommene geschlossene, aber auch eine durch Füllstücke 31 ergänzte Ringanordnung bilden, so dass Kupplungskörper 1 mit verschiedener Zahnanzahl und Konfiguration ausgebildet werden können.
Alle Prägesegmente 25 arbeiten im ersten Prägeabschnitt A gleichzeitig und prägen in den randnahen Oberflächenbereich des Zuschnitts s8 zwischen Kopfkreis FK und Fußkreis KK die Dächer 11 ein, die in den Senken 12 zusammenlaufen, wobei jeweils zwei Dächer 11 mit ihrer Senke 12 durch eine Lücke 10 von benachbarten Dächern beabstandet sind. Ebenso prägen die festen Prägesegmente 24 im zweiten Prägeabschnitt B die Dächer 11 mit Senken 12 in die Lücken 10 ein, so dass am Zuschnitt 8 ein randnaher geschlossener Umformbereich U gebildet wird, der aus zahnkranzartig aneinandergereihten in Richtung Oberseite des Zuschnitts 8 ausgerichteten Dächern 11 und Senken 12 gebildet wird.

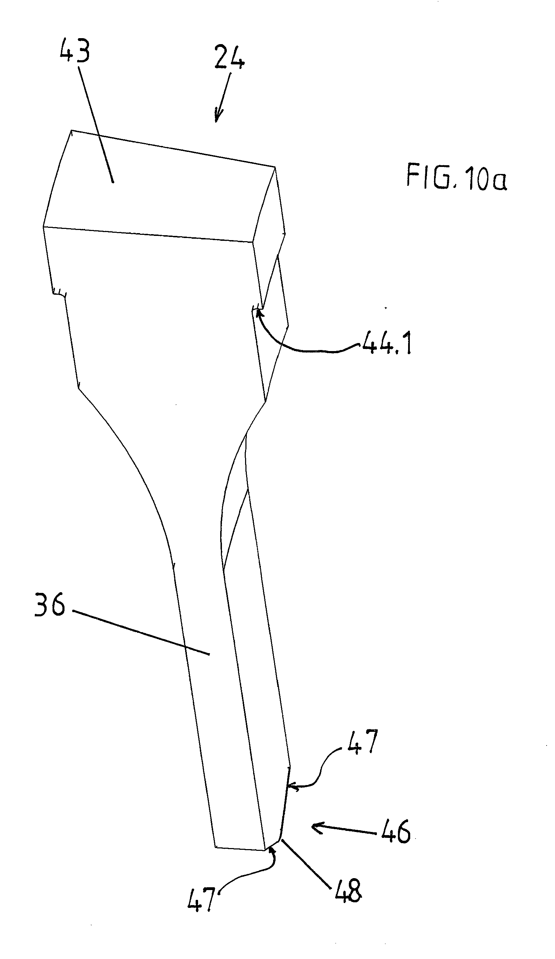

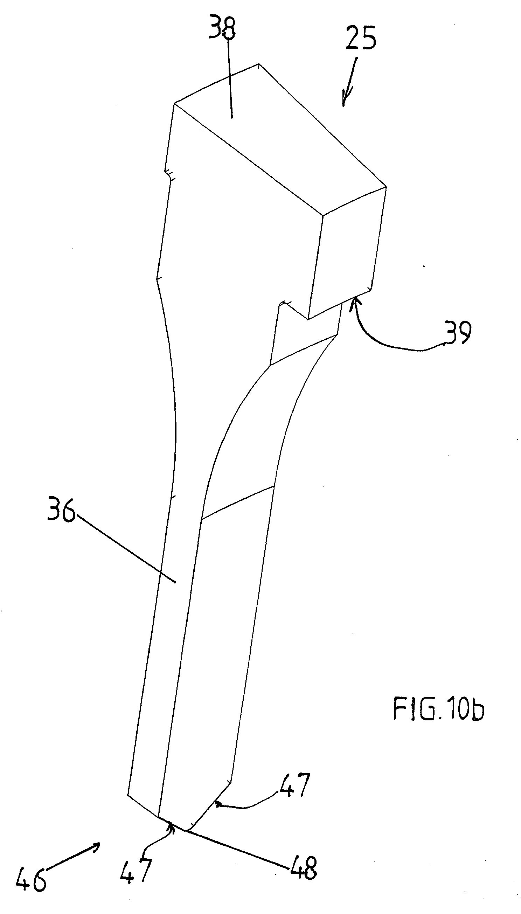

Die Fig. 10a und 10b zeigen die Ausbildung und Form der Prägesegmente 24 und 25, wonach der Schaft 36 und der Prägefuß 46 beider Prägesegmente 24 und 25 formen- und abmessungsgleich sind. Der Prägefuß 46 hat dachartig geformte Prägeflächen 47, die in einem First 48 zusammenlaufen. Der First 48 des Prägefußes 46 ist so angeordnet, dass er senkrecht zwischen Fußkreis FK und Kopfkreis KK zu liegen kommt und der Lage der Senke 12 entspricht.
Die Schulter 39 des Prägesegments 25 hat gegenüber der inneren Schulter 44.1 des Prägesegments 24 eine deutlich größere Tiefe, damit der Kopf 38 des Prägesegments 25 in der Ausnehmung 41 der inneren Halteplatte 42 sicheren Halt findet. Beide Köpfe 38 und 43 haben eine zum Mittelpunkt des Fußkreises FK bzw. Kopfkreises KK leicht verjüngende Form, so dass die Prägesegmente 24 und 25 nebeneinander angeordnet eine geschlossene Ringanordnung bilden können.

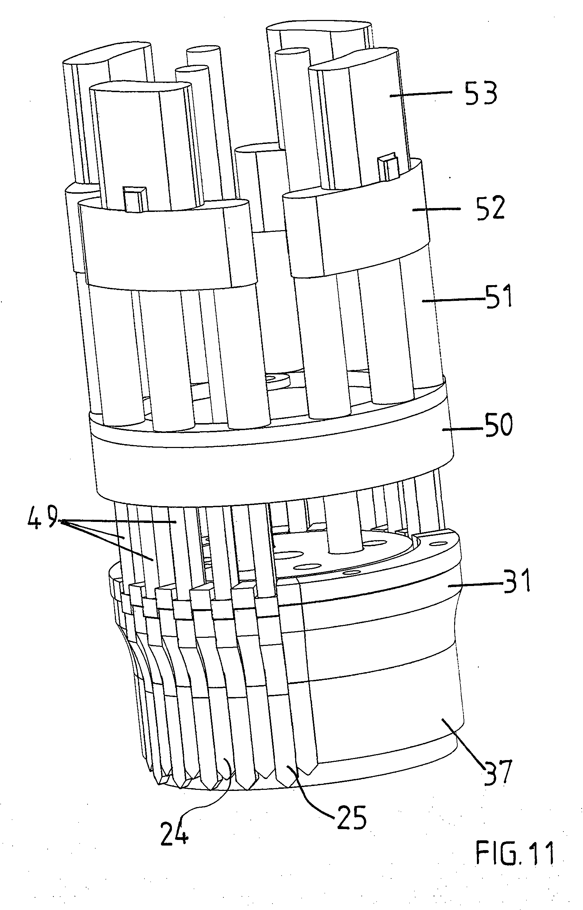

Die Fig. 11 zeigt die Druckbeaufschlagung der beweglichen Prägesegmente 25, die entsprechend der Ringanordnung der Prägesegmente von Druckstücken 49 beaufschlagt werden, welche im Kraftschluss zu einem Druckstückring 50 stehen, auf dem Druckbolzen 51 gleichmäßig verteilt angeordnet sind. Jeweils drei Druckbolzen sind unter einer Brücke 52 zusammengefast und werden von einem nicht weiterdargestellten Hydrauliksystem über ein Druckstück 53 mit Druck beaufschlagt, um eine gegenüber den festen Prägesegmenten 24 voreilende Axialbewegung zum sequentiellen Prägen der Dächer 11 und Senken 12 im randnahen Bereich des Zuschnitts 8 auszuführen.

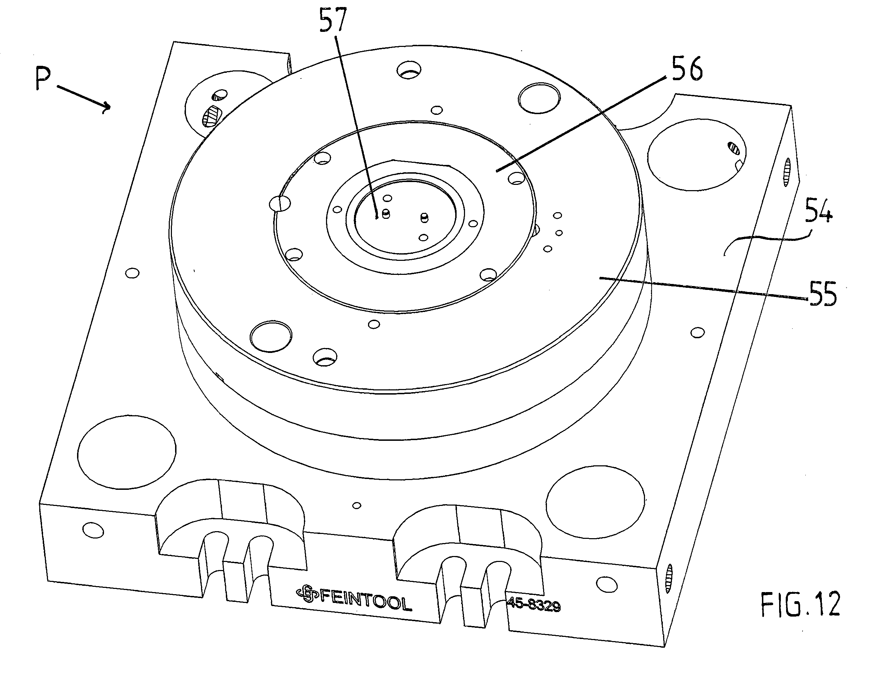

Die Fig. 12 zeigt das Unterteil 19 der Prägestufe P mit dem unteren Block 54, der an seiner dem oberen Block 18 zugewandten Oberseite eine Matrizeneinfassung 55 trägt. In die Matrizeneinfassung 55 ist ein Matrizeneinsatz 56 eingesetzt, in dem ein Prägeambos 57 der Prägestufe P über eine nicht weiter dargestellte Druckplatte mit Druck zum Aufnehmen der Prägekräfte beaufschlagbar ist. Der Prägeambos 57 hat eine plane Kreisform, deren Durchmesser an den Durchmesser D des Zuschnitts 8 abgestimmt ist.

Es wird nun auf die Beschneidestufe BS der erfindungsgemäßen Vorrichtung Bezug genommen. Die Beschneidestufe BS setzt sich im Wesentlichen aus einem in einem Oberteil untergebrachten Schneidstempel, einer Führungs- oder Ringzackenplatte, Ausstoßer und entsprechenden Druckbolzen sowie aus einer in einem Unterteil angeordneten Schneidplatte, einem Auswerfer und Druckbolzen zusammen. Eine derartige Anordnung entspricht dem Stand der Technik und muss deshalb nicht weiter in ihrem Aufbau dargestellt werden. Es versteht sich, dass der Schneidstempel und die Schneidplatte in ihrer Geometrie und Form zum Freischneiden der Senken 12 entsprechend abgestimmt sind.

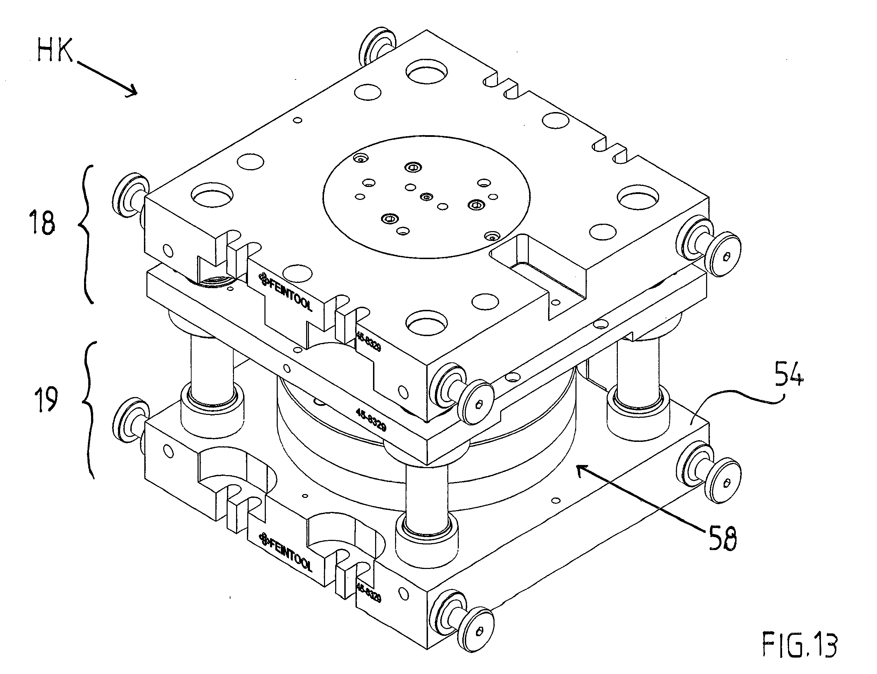

In den Fig. 13 bis 18 wird jetzt die erfindungsgemäße Vorrichtung der Hinterlegungs- und Kalibrierstufe HK näher beschrieben.

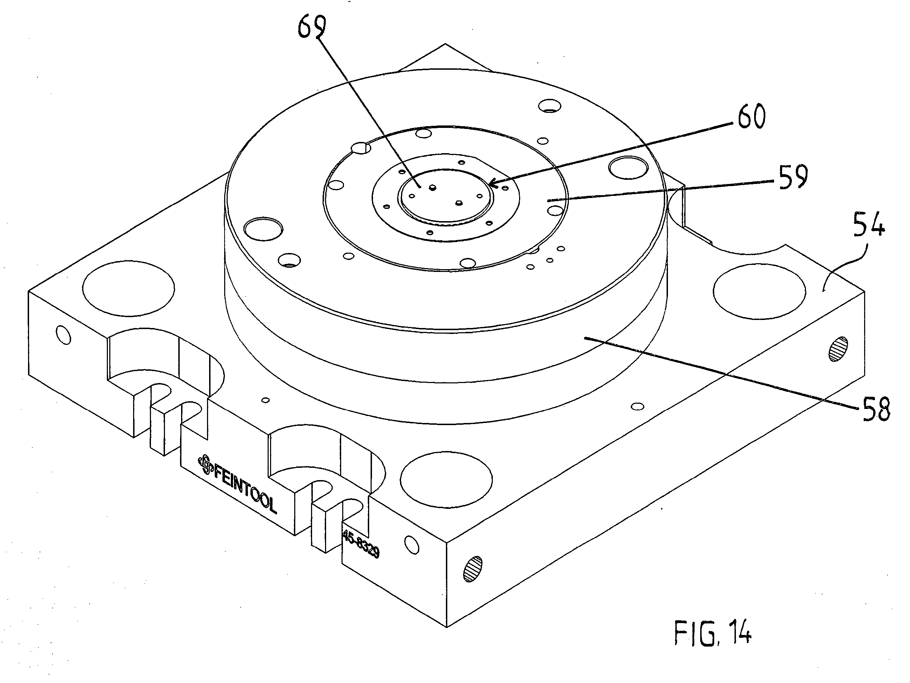

Die Fig. 13 zeigt eine perspektivische Ansicht der Hinterlegungs- und Kalibrierstufe HK, die sich wie die Prägestufe P aus einem Oberteil 18 und einem Unterteil 19 zusammensetzt. Der untere Block 54 des Unterteils 19 trägt eine Matrizeneinfassung 58, in der ein Matrizeneinsatz 59 eingesetzt ist, welches ein Prägegesenk 60 aufnimmt (siehe Fig. 14).

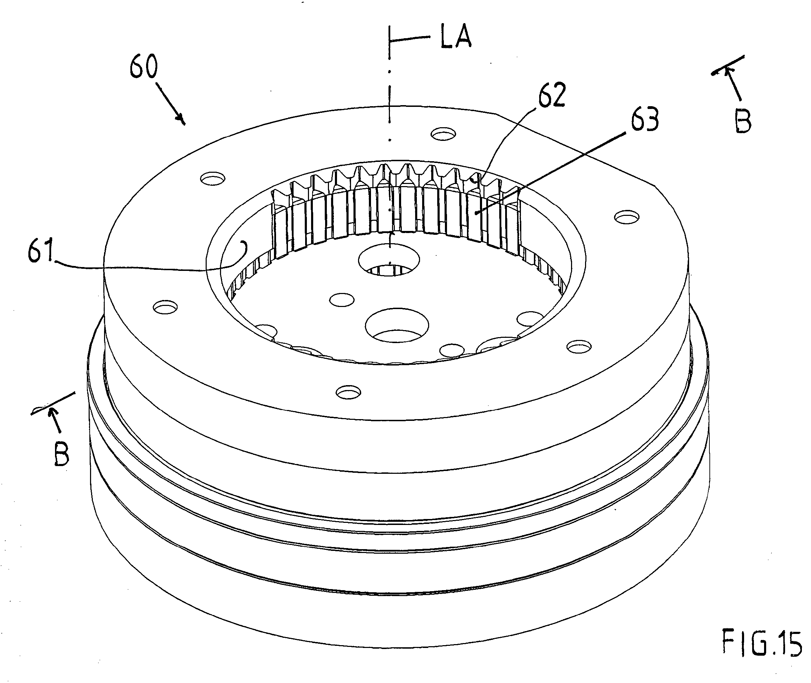

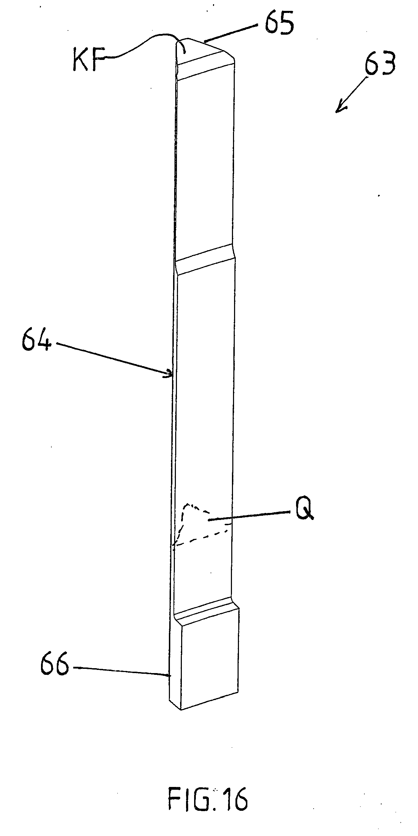

Das Prägesenk 60 hat -wie die Fig. 15 zeigteinen hülsenartigen Aufbau. In die Innenwand 61 des Prägesenks 60 sind in Richtung Gesenkachse LA prismatisch ausgebildete Ausnehmungen 62 eingebracht, in der Prägestempel 63 axial führbar sind. Die Ausnehmungen 62 sind so angeordnet, dass sie den jeweils freigeschnittenen Senken 12 am Zuschnitt 8 entsprechen, so dass die Prägestempel 63 jeweils die Zahnflanken 16.1 und 16.2 zweier benachbarter Zahnkörper 15 bearbeiten können. Die Fig. 16 zeigt einen Prägestempel 63, der einen langgestreckten prismatischen Schaft 64 mit einem Kopf 65 und Fuß 66 besitzt. Der Kopf 65 hat eine Kopffläche KF, die der Form und Geometrie der von den Dächern 11 gebildeten Senken 12 entspricht. Der Schaft 64 besitzt einen vom Fuß 66 zum Kopf 65 leicht abnehmenden Querschnitt Q, so dass eine Konizität über die Schaftlänge entsteht. Die Konizität ist auf den gewünschten Hinterlegungswinkel α der Zahnflanken 16.1 und 16.2 abgestimmt, so dass die Zahnflanken 16. 1 bzw. 16.2 der Zahnkörper mit zugewandten Seitenflächen 67 des Schaftes 64 im gewünschten Umfang verformt werden können.

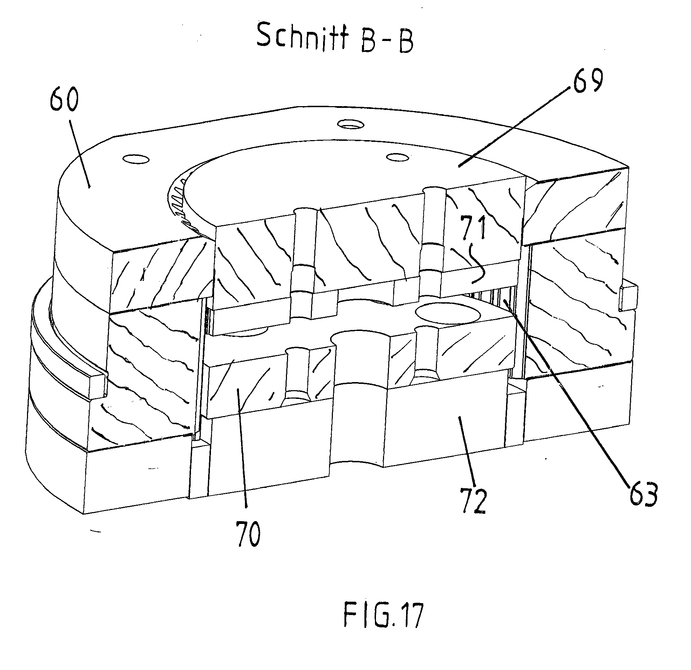

Die Fig. 17 zeigt einen Schnitt entlang der Linie B-B der Fig. 15, die die innere Abstützung der Prägestempel 63 im Prägesenk 60 verdeutlicht. Die Prägestempel 63 liegen mit ihrem Fuß 66 auf einem Druckstückring 68, der seinerseits auf einer nicht weiter dargestellten Matrizendruckplatte befestigt ist. Zur inneren radialen Abstützung bzw. Führung gehören ein Gegenhalter 69, Halteplatten 70 und 71 sowie eine Druckplatte 72 für den Gegenhalter 69.
Unter Bezug auf Fig. 17 in Verbindung mit Fig. 16 besitzt der Schaft 64 an seiner zum Gegenhalter 69 bzw. zur Halteplatte 71 zugewandten Seite Vorsprünge 73, an denen der Gegenhalter 69 bzw. die Halteplatte 71 aufliegen.

Die Fig. 18 stellt eine Schnittdarstellung durch das zum unteren Block 19 gehörende Prägegesenk 60 und den zum oberen Block 18 gehörenden ringförmig ausgebildeten Kalibrierambos 74, der auf seiner dem Prägegesenk 60 zugewandten Seite eine an die zukünftige Dachform der Zähne 2 angepasste Form aufweist.
Der in den Senken 12 freigeschnittene, mit Zahnflanken 16.1 und 16.2 versehene Zuschnitt 8 liegt zwischen Prägesenk 60 und dem Kalibrierambos 74 so ein, dass die Prägestempel 63 bei ihrer Zustellbewegung mit dem unteren Block 54 in den freigeschnittenen Bereich der Zahnkörper 15 gelangen und dadurch die Zahnflanken 16.1 und 16.2 in der gewünschten Winkellage hinterlegen und zugleich der Kalibrierambos 74 mit seiner Kalibrierfläche eine kalibrierte Dachform am Zahn erzeugt.

**Bezugszeichenliste**

| | |
|---|---|
| Kupplungskörper | 1 |
| Zähne an 1 | 2 |
| Zahnflanken von 2 | 3 |
| Dachfläche von 2 | 4 |
| First von 2 | 5 |
| Kopffläche von | 6 |
| Bandstreifen | 7 |
| Zuschnitt | 8 |
| Oberseite des Zuschnitts 8 | 9 |
| Abstände | 10 |
| Dächer | 11 |
| Senken zwischen 2 Dächern | 12 |
| Zahnspitzen | 13 |
| First der Fächer | 14 |
| Zahnkörper | 15 |
| Zahnflanken an 15 | 16.1, 16.2 |
| Dachflächen an 15 | 17.1, 17.2 |
| Oberteil der Prägestufe | 18 |
| Unterteil der Prägestufe | 19 |
| Oberer Block von 18 | 20 |
| Führungsplatte von 18 | 21 |
| Führung an 21 | 22 |
| Führungseinsatz | 23 |
| Feste Prägesegmente | 24 |
| Bewegliche Prägesegmente | 25 |
| Führungshalteplatte an 21 | 26 |
| Druckplatte an 21 | 27 |
| Untere Druckplatte | 28 |
| Zwischenplatte | 29 |
| Lücken zwischen Prägesegmenten | 30 |
| Füllstück | 31 |
| Distanzringe | 32, 33 |
| Äußere untere Halteplatte | 34 |
| Äußere obere Halteplatte | 35 |
| Schaft von 24 und 25 | 36 |
| Ausstoßer | 37 |
| Kopf von 25 | 38 |
| Schulter von 38 | 39 |
| Ring am Ausstoßer 37 | 40 |
| Ausnehmungen an innerer Halteplatte | 41 |
| Innere Halteplatte | 42 |
| Kopf von 24 | 43 |
| Innenseitige Schulter an 43 | 44.1 |
| Außenseitige Schulter an 43 | 44.2 |
| Zähne an innerer Halteplatte 42 | 45 |
| Prägefuß von 24, 25 | 46 |
| Prägeflächen von 46 | 47 |
| First von 47 | 48 |
| Druckstücke für 25 | 49 |
| Druckstückring | 50 |
| Druckbolzen | 51 |
| Brücke für Druckbolzen 50 | 52 |
| Druckstück für Brücke 52 | 53 |
| Unterer Block der Prägestufe P | 54 |
| Matrizeneinfassung von 54 | 55 |
| Matrizeneinsatz | 56 |
| Prägeambos von P | 57 |
| Matrizeneinfassung von HK | 58 |
| Matrizeneinsatz von HK | 59 |
| Prägegesenk | 60 |
| Innenwand von 60 | 61 |
| Ausnehmungen in 61 | 62 |
| Prägestempel | 63 |
| Schaft von 63 | 64 |
| Kopf von 63 | 65 |
| Fuß von 63 | 66 |
| Stützfläche von 63 | 67 |
| Druckstückring für 63 | 68 |
| Gegenhalter in 60 | 69 |
| Halteplatten in 60 | 70, 71 |
| Druckplatte für Gegenhalter 68 | 72 |
| Vorsprünge an 64 | 73 |
| Kalibrierambos | 74 |
| 1. Prägeabschnitt von P | A |
| 2. Prägeabschnitt von P | B |
| Breite des Daches | b |
| Beschneidestufe | BS |
| Durchmesser der Zuschnitts 8 | D |
| Freigeschnittener Flächenbereich von 12 | F |
| Fußkreis | FK |
| Hinterlegungs- und Kalibrierstufe | HK |
| Kopffläche von 65 | KF |
| Kopfkreis | KK |
| Länge des Daches l | |
| Gesenkachse von 60 | LA |
| Prägestufe | P |
| Querschnitt von 63 | Q |
| Umformbereich von 8 | U |
| Hinterlegungswinkel von 16.1, 16.2 | α |

## Patentansprüche

1. Vorrichtung zum Herstellen von für Synchronisationssysteme geeignete mit Zähnen (2) bzw. Zahnabschnitten versehene Kupplungskörper (1) aus einem Zuschnitt (8) mindestens einer aus festen und beweglichen Prägesegmenten (24,25) und Ambos (57) zusammengesetzten Prägestufe (P) zum Prägen von Dächern (11) und Senken (12) zwischen Fuß- und Kopfkreis (FK,KK) in eine Oberseite der Zuschnitts (8) und ein Transfermittel zum Transportieren der Zuschnitte (8), **dadurch gekennzeichnet, dass** die festen Prägesegmente (24) einen ersten Abschnitt (A) und die beweglichen Prägesegmente (25) einen zweiten Abschnitt (B) sequentiellen Prägen innerhalb der Prägestufe (P) bilden, wobei die Prägesegmente (24) zuerst den Abschnitt (A) prägen, dann gegenüber den Prägesegmenten (25) zurücklaufen und sodann die Prägesegmente (25) den Abschnitt (B) prägen und wobei die festen und beweglichen Prägesegmente (24,25) in einer Ringanordnung nebeneinander angeordnet sind und die beweglichen Prägesegmente (25) relativ axial beweglich gegenüber den festen Prägesegmenten (24) des ersten Abschnitts (A) ausgebildet sind, und dass die Vorrichtung weiterhin umfasst
a) eine Beschneidestufe (BS) zum Freischneiden der Senken (12) zur Ausbildung von stirnseitig am Zuschnitt (8) aufragenden Zahnkörpern (15) mit Zahnflanken (16.1,16.2) und Dächern ohne Prägen und
b) eine Hinterlegungs- und Kalibierstufe (HK) zum Hinterlegen der Zahnflanken (16.1, 16.2) und zum Kalibrieren der Dächer des Zahnkörpers (15) in die Endform durch Prägestempel (63) und einen mit den Prägestempeln (63) zusammenwirkenden Kalibrierambos (74).

2. Vorrichtung nach Anspruch 1, **dadurch gekennzeichnet, dass** die Dächer (11) mit Senken (12) des ersten Abschnitts (A) und zweiten Abschnitts (B) einen gemeinsamen Umformbereich (U) bilden, der zwischen Kopf- und Fußkreis (FK, KK) der zukünftigen Zähne (2) randnah im Zuschnitt (8) angeordnet ist.

3. Vorrichtung nach Anspruch 1, **dadurch gekennzeichnet, dass** der erste Abschnitt (A) von festen Prägesegmenten (24) durch das 1.-, 3.-, 5.- und n.- Prägesegment und der zweite Abschnitt (B) von beweglichen Prägesegmenten (25) durch das 2.-, 4.-, 6-, und n-1 Prägesegment die Ringanordnung bilden, deren Durchmesser dem Kopfkreis (KK) der zukünftigen Zähne (2) entspricht.

4. Vorrichtung nach Anspruch 1, **dadurch gekennzeichnet, dass** die festen Prägesegmente (24) des ersten Abschnittes (A) durch mindestens ein Füllstück (31) auffüllbar ist.

5. Vorrichtung nach Anspruch 1, **dadurch gekennzeichnet, dass** die festen und beweglichen Prägesegmente (24,25) des ersten und zweiten Abschnitts (A,B) einen Schaft (36) mit Prägefuß (46) aufweisen, der Prägeflächen (47) mit gleichen Formen und Abmessungen und einen Dachfirst (48) besitzt, wobei der Dachfirst (48) senkrecht zum Fußkreis (FK) und Kopfkreis (KK) ausgerichtet ist.

6. Vorrichtung nach Anspruch 1 oder 5, **dadurch gekennzeichnet, dass** der Schaft (36) der festen und beweglichen Prägesegmente (24,25) des ersten und zweiten Abschnitts (A,B) mit einem hammerkopfähnlich trapezoid-ausgebildeten Kopf (38, 43) versehen, der gegenüber dem Schaft (36) vorsprungartige Schultern (39, 44.1, 44.2) aufweist, wobei die Schultern (39) der beweglichen Prägesegmente (25) die Axialbewegung auf der inneren unteren Halteplatte (42) begrenzen und der Kopf (38) von am äußeren Umfang der inneren oberen Halteplatte (42) eingebrachte, durch Zähne (45) beabstandete Ausnehmungen (41) seitlich geführt ist, und die Schultern (44.1) der festen Prägesegmente (24) auf den Zähnen (45) der inneren oberen Halteplatte (42) im Kraftschluss durch eine Druckplatte (27) gehalten ist, so dass die festen Prägesegmente (24) gegenüber den beweglichen Prägesegmenten (25) fixiert sind.

7. Vorrichtung nach Anspruch 1, **dadurch gekennzeichnet, dass** jedem der beweglichen Prägesegmente (25) des Abschnitts (B) zur Übertragung der Axialbewegung ein Druckstück (49) zugeordnet ist, das mit einem Druckstückring (50) in Wirkverbindung steht, auf welchem Druckbolzen (51) gleichmäßig verteilt angeordnet sind, von denen mehrere Druckbolzen (51) zu einer Gruppe unter eine gemeinsame Brücke (52) zusammengefasst sind, die jeweils über ein Druckstück (53) den Kraftschluss zu den beweglichen Prägesegmenten (25) aufrechterhalten.

8. Vorrichtung nach Anspruch 1, **dadurch gekennzeichnet, dass** in der Beschneidestufe (BS) zumindest ein Schneidstempel, eine Schneidplatte und ein Ausstoßer vorgesehen sind, deren Geometrie an die Zahnflankenform der zukünftigen Zähne (2) angepasst ist.

9. Vorrichtung nach Anspruch 1, **dadurch gekennzeichnet, dass** für das Hinterlegen und Kalibrieren des freigeschnittenen Zahnkörpers (15) in der Hinterlegungs- und Kalibrierstufe (HK) ein hülsenartig ausgebildetes Prägesenk (60) vorgesehen ist, das an seiner inneren Wandung (61) mit zur Gesenkachse (LA) parallel angeordneten, zwischen Fuß- und Kopfkreis (FK, KK) gelegene Ausnehmungen (62) versehen ist, die so positioniert sind, dass sie jeweils den freigeschnittenen Senken (12) zugeordnet sind, wobei in den Ausnehmungen (62) Prägestempel (63) angeordnet sind, die einen sich in Bewegungsrichtung im Querschnitt konisch vergrößernden Schaft (64) zur Hinterlegung der Zahnflanken (16.1, 16.2) des Zahnkörpers (15) und einen dachartig ausgebildeten Kopf (65) zur Kalibrierung der Dachform aufweisen, und dass ein Kalibrierambos (74)) vorgesehen ist, dessen Kalibrierfläche an die Dachform und -geometrie der Zähne (2) angepasst ist.

10. Vorrichtung nach Anspruch 9, **dadurch gekennzeichnet,dass** die Prägestempel (63) durch einen im Prägegesenk (60) senkrecht zur Gesenkachse (LA) angeordneten, übereinander liegenden scheibenförmigen Gegenhalter (69) und Halteplatten (70,71) radial gehalten sind, wobei die Prägestempel (63) eine Stützseite (67) aufweisen, die der Stirnseite von Gegenhalter (69) und Halteplatten (70,71) zugewandt sind.

11. Vorrichtung nach Anspruch 9, **dadurch geken**n**zeichnet,** dass den Prägestempeln (63) fußseitig ein Druckstückring (68) zugeordnet ist.

12. Vorrichtung nach Anspruch 9, **dadurch gekennzeichnet,dass** die Prägestempel (63) eine an die Zahngeometrie angepasste prismatische langgestreckte Form aufweisen, wobei die Stützseite (67) mit Vorsprüngen (73) zur Auflage der Halteplatten (70,71) und des Gegenhalters (69) versehen ist.

13. Verfahren zum Herstellen von für Synchronisationssysteme geeignete Kupplungskörper aus einem Zuschnitt (8) mit einer mindestens Prägesegmente und einen Ambos enthaltenden Prägestufe (P), in der ringartig aneinandergereihte Senken und Dächer im umfangsnahen Randbereich unmittelbar in die Oberseite des Zuschnitts (8) durch Prägen entlang eines Fuß- und Kopfkreises (FK, KK) der zukünftigen Zähne (2) bzw. Zahnabschnitte eingebracht werden,
**gekennzeichnet durch** folgende Schritte:
a) Einbringen von Dächern (11) und Senken (12) **durch** ein erstes Prägen, bei dem die Dächer (11) mit Senken (12) voneinander in einem gleichen Abstand in einer Ringanordnung positioniert werden, und **durch** ein dem ersten Prägen nacheilendes zweites Prägen von Dächern (11) und Senken (12), bei dem die Abstände in der Ringanordnung mit Dächer und Senken gefüllt werden, wobei das erste Prägen und zweite Prägen in einer einzigen Prägestufe ausgeführt werden,
b) Beschneiden der Senken (12) zum Entfernen eines Materialbereichs an jeweils ihren tiefsten Punkt, so dass an der Stirnseite des Zuschnitts (8) Zahnkörper (15) entlang des Fußkreises (FK) mit Zahnflanken (16.1,16.2) und Dächern ohne Prägen entstehen,
c) Hinterlegen der Zahnflanken (16.1, 16.2) **durch** ein Prägen mit Prägestempeln (62) und Kalibrieren der Dachform der Dächer mit einem an die Dachform angepassten Kalibrierambos (74).

## Claims

1. An apparatus for producing clutch bodies (1) suitable for synchronisation systems and provided with teeth (2) resp. tooth portions from a blank (8), with at least one stamping stage (P) composed of fixed and mobile stamping segments (24, 25) and anvil (57) for stamping roof portions (11) and depressions (12) between root circle and addendum circle (FK, KK) into the top of the blank (8), and a transfer means for transporting the blanks (8), **characterised in that** the fixed stamping segments (24) form a first portion (A) and the mobile stamping segments (25) a second portion (B) for sequential stamping within the stamping stage (P), wherein the stamping segments (24) firstly stamp the portion (A), then travel back relative to the stamping segments (25), the stamping segments (25) then stamping the portion (B), and wherein the fixed and mobile stamping segments (24, 25) are arranged in an annular arrangement adjacent one another and the mobile stamping segments (25) are configured to be axially mobile relative to the fixed stamping segments (24) of the first portion (A), and **in that** the apparatus further comprises
a) a trimming stage (BS) for cutting out the depressions (12) to form tooth bodies (15) which project from the blank (8) at the end face and have tooth flanks (16.1, 16.2) and roof portions, without stamping, and
b) an undercutting and calibrating stage (HK) for undercutting the tooth flanks (16.1, 16.2) and for calibrating the roof portions of the tooth body (15) to yield the final shape using stamping dies (63) and a calibrating anvil (74) interacting with the stamping dies (63).

2. An apparatus according to claim 1, **characterised in that** the roof portions (11) with depressions (12) of the first portion (A) and second portion (B) form a common forming region (U), which is arranged close to the edge of the blank (8) between the addendum and root circles (FK, KK) of the future teeth (2).

3. An apparatus according to claim 1, **characterised in that** the first portion (A) consisting of fixed stamping segments (24) and the second portion (B) consisting of mobile stamping segments (25) form, with the 1st, 3rd, 5th and nth stamping segments and the 2nd, 4th, 6th and n-1th stamping segments respectively, the annular arrangement, the diameter of which corresponds to the addendum circle (KK) of the future teeth (2).

4. An apparatus according to claim 1, **characterised in that** the fixed stamping segments (24) of the first portion (A) may be filled in by at least one filler piece (31).

5. An apparatus according to claim 1, **characterised in that** the fixed and mobile stamping segments (24, 25) of the first and second portions (A, B) comprise a shank (36) with stamping foot (46), which has stamping surfaces (47) of identical shapes and sizes and a roof ridge (48), wherein the roof ridge (48) is oriented perpendicular to the root circle (FK) and addendum circle (KK).

6. An apparatus according to claim 1 or claim 5, **characterised in that** the shank (36) of the fixed and mobile stamping segments (24, 25) of the first and second portions (A, B) are provided with a hammer head-like, trapezoidally configured head (38, 43), which has shoulders (39, 44.1, 44.2) projection-like relative to the shank (36), wherein the shoulders (39) of the mobile stamping segments (25) restrict axial motion on the inner, lower mounting plate (42) and the head (38) is guided laterally by recesses (41) introduced at the outer circumference of the inner, upper mounting plate (42) and spaced by teeth (45), and the shoulders (44.1) of the fixed stamping segments (24) are retained in a non-interlocking contact fit on the teeth (45) of the inner, upper mounting plate (42) by a pressure plate (27), such that the fixed stamping segments (24) are immobilised relative to the mobile stamping segments (25).

7. An apparatus according to claim 1, **characterised in that** each of the mobile stamping segments (25) of portion (B) is associated, for transmission of axial motion, with a pressure piece (49), which is in operative connection with a pressure piece ring (50), on which pressure pins (51) are uniformly distributed, of which a plurality of pressure pins (51) are combined into a group under a common bridge (52), each maintaining the non-interlocking contact fit with the mobile stamping segments (25) via a pressure piece (53).

8. An apparatus according to claim 1, **characterised in that** in the trimming stage (BS) at least one punch, one cutting die and one ejector are provided, the geometry of which is conformed to the tooth flank shape of the future teeth (2).

9. An apparatus according to claim 1, **characterised in that**, for undercutting and calibration of the cut-out tooth body (15) in the undercutting and calibration stage (HK), a forging die (60) of sleeve-like configuration is provided, which is provided on its internal wall (61) with recesses (62) arranged parallel to the forging die axis (LA) and placed between the root and addendum circles (FK, KK), said recesses being positioned such that they are each assigned to the cut-out depressions (12), wherein in the recesses (62) stamping dies (63) are arranged, which comprise a shank (64) increasing conically in cross-section in the direction of movement for undercutting the tooth flanks (16.1, 16.2) of the tooth body (15) and a head (65) of roof-like configuration for calibrating the roof portion shape, and **in that** a calibrating anvil (74) is provided, the calibrating surface of which is conformed to the roof portion shape and geometry of the teeth (2).

10. An apparatus according to claim 9, **characterised in that** the stamping dies (63) are held radially by a steady (69) and mounting plates (70, 71), which are disc-shaped and arranged one above the other in the forging die (60) perpendicular to the forging die axis (LA), wherein the stamping dies (63) have a supporting side (67) which faces the end face of steady (69) and mounting plates (70, 71).

11. An apparatus according to claim 9, **characterised in that** the stamping dies (63) are associated at the foot end with a pressure piece ring (68).

12. An apparatus according to claim 9, **characterised in that** the stamping dies (63) have a prismatic elongate shape conformed to the tooth geometry, wherein the supporting side (67) is provided with projections (73) for supporting the mounting plates (70, 71) and the steady (69).

13. A method for producing clutch bodies suitable for synchronisation systems from a blank (8), having a stamping stage (P) comprising at least stamping segments and an anvil, in which stamping stage depressions and roof portions arranged annularly in a row in the peripheral region close to the circumference are introduced directly into the top of the blank (8) by stamping along a root and addendum circle (FK, KK) of the future teeth (2) resp. tooth portions, **characterised by** the following steps:
a) introducing roof portions (11) and depressions (12) by first stamping, in which the roof portions (11) with depressions (12) are positioned identically spaced in an annular arrangement, and by second stamping of roof portions (11) and depressions (12) subsequent to the first stamping, in which second stamping the spaces in the annular arrangement are filled in with roof portions and depressions, wherein the first stamping and second stamping are performed in a single stamping stage,
b) rimming the depressions (12) to remove a material region at their respective lowest point, resulting in tooth bodies (15) on the end face of the blank (8) along the root circle (FK) with tooth flanks (16.1, 16.2) and roof portions, without stamping,
c) undercutting the tooth flanks (16.1, 16.2) by stamping with stamping dies (62) and calibrating the roof shape of the roof portions with a calibrating anvil (74) conformed to the roof shape.

## Revendications

1. Procédé de fabrication de corps de couplage (1) pourvus de dents (2) resp. segments de dents, adaptés à des systèmes de synchronisation, à partir d'un flan (8) d'au moins un étage d'estampage (P) composé de segments d'estampage fixes et mobiles (24, 25) et d'une enclume (57) pour l'estampage de toits (11) et de creux (12) entre une couronne de base et une couronne de sommet (FK, KK) dans un côté supérieur du flan (8), et un moyen de transfert pour le transport des flans (8), **caractérisé en ce que** les segments d'estampage fixes (24) forment une première section (A) et les segments d'estampage mobiles (25) forment une seconde section (B) pour l'estampage séquentiel à l'intérieur de l'étage d'estampage (P), les segments d'estampage (24) estampant d'abord la section (A) puis revenant à leur place par rapport aux segments d'estampage (25), et les segments d'estampage (25) estampant ensuite la section (B), et les segments d'estampage fixes et mobiles (24, 25) étant disposés les uns à côté des autres en agencement annulaire et les segments d'estampage mobiles (25) étant conçus relativement mobiles axialement par rapport aux segments d'estampage fixes (24) de la première section (A), et **en ce que** le dispositif comprend, en outre,
a) un étage de détourage (BS) pour la découpe des creux (12) sans guidage pour former, sans estampage, des corps de dent (15) saillant sur le côté frontal du flan (8) présentant des faces de dent (16.1, 16.2) et des toits, et
b) un étage de pliage arrière et de calibrage par frappe (HK) pour plier l'arrière des faces de dent (16.1, 16.2) et pour calibrer les toits du corps de dent (15) afin de leur donner leur forme finale grâce à des outillages de frappe (63) et à une enclume de calibrage (74) coopérant avec les outillages de frappe (63).

2. Dispositif selon la revendication 1, **caractérisé en ce que** les toits (11) forment avec les creux (12) de la première section (A) et de la seconde section (B) une zone déformée commune (U) qui est située près du bord du flan (8) entre la couronne de sommet et la couronne de base (FK, KK) des futures dents (2).

3. Dispositif selon la revendication 1, **caractérisé en ce que** l'agencement annulaire, dont le diamètre correspond à la couronne de sommet (KK) des futures dents (2), est formé par la première section (A) de segments d'estampage fixes (24), grâce aux 1^{er}, 3^{e}, 5^{e} et ne segments d'estampage, et par la seconde section (B) de segments d'estampage mobiles (B), grâce aux 2^{e}, 4^{e}, 6^{e} et n-1^{e} segments d'estampage.

4. Dispositif selon la revendication 1, **caractérisé en ce que** les segments d'estampage fixes (24) de la première section (A) peuvent être complétés par au moins une pièce intercalaire (31).

5. Dispositif selon la revendication 1, **caractérisé en ce que** les segments d'estampage fixes et mobiles (24, 25) de la première et de la seconde section (A, B) comprennent une tige (36) pourvue d'un pied d'estampage (46) possédant des surfaces d'estampage (47) de même forme et de mêmes dimensions et une arête de toit (48), l'arête de toit (48) étant dirigée perpendiculairement à la couronne de base (FK) et à la couronne de sommet (KK).

6. Dispositif selon la revendication 1 ou 5, **caractérisé en ce que** la tige (36) des segments d'estampage fixes et mobiles (24, 25) de la première et de la seconde section (A, B) est pourvue d'une tête (38, 43) de forme trapézoïdale semblable à une tête de marteau qui présente des épaulements (39, 44.1, 44.2) saillants par rapport à la tige (36), les épaulements (39) des segments d'estampage mobiles (25) limitant le mouvement axial sur la plaque de maintien intérieure inférieure (42) et la tête (38) étant guidée latéralement par des évidements (41) séparés par des dents (45) situés sur la conférence extérieure de la plaque de maintien intérieure supérieure (42), et les épaulements (44.1) des segments d'estampage fixes (24) étant maintenus par adhérence sur les dents (45) de la plaque de maintien intérieure supérieure (42) par une plaque de pression (27), de sorte que les segments d'estampage fixes (24) sont immobilisés par rapport aux segments d'estampage mobiles (25).

7. Dispositif selon la revendication 1, **caractérisé en ce qu'**une pièce de pression (49) est associée à chacun des segments d'estampage mobiles (25) de la section (B) pour la transmission du mouvement axial, laquelle pièce de pression a une liaison fonctionnelle avec un anneau de pièces de pression (50) sur lequel sont disposés des boulons de pression (51) uniformément répartis, dont plusieurs forment un groupe de boulons de pression (55) rassemblés sous un pont commun (52) qui maintiennent chacun la force d'adhérence vis-à-vis des segments d'estampage mobiles (25) par le biais d'une pièce de pression (53).

8. Dispositif selon la revendication 1, **caractérisé en ce qu'**il est prévu, dans l'étage de détourage (BS), au moins un poinçon d'ébavurage, une plaque de découpage et un éjecteur dont la géométrie est adaptée à la forme des faces de dent des futures dents (2).

9. Dispositif selon la revendication 1, **caractérisé en ce que**, pour le pliage arrière et le calibrage du corps de dent (15) formé par découpe sans guidage dans l'étage de pliage arrière et de calibrage par frappe (HK), il est prévu une matrice (60) conçue à la manière d'une douille qui est pourvue, sur sa paroi intérieure (61), d'évidements (62) disposés parallèlement à l'axe de matrice (LA) et se trouvant entre la couronne de base et la couronne de sommet (FK, KK), lesquels évidements sont positionnés de manière à être chacun associés aux creux (12) formés par découpe sans guidage, des outillages de frappe (63) étant disposés dans les évidements (62), lesquels outillages comprennent une tige (64) dont la section transversale s'élargit de manière conique dans la direction de mouvement pour le pliage arrière des faces de dent (16.1, 16.2) du corps de dent (15) et une tête (65) conçue comme un toit pour le calibrage du profil de toit, et **en ce qu'**il est prévu une enclume de calibrage (74) dont la surface de calibrage est adaptée au profil et à la géométrie de toit des dents (2).

10. Dispositif selon la revendication 9, **caractérisé en ce que** les outillages de frappe (63) sont maintenus radialement par un fond de matrice (69) et des plaques de maintien (70, 71) en forme de disque disposés les uns au-dessus des autres dans la matrice (60) perpendiculairement à l'axe de matrice (LA), les outillages de frappe (63) présentant un côté d'appui (67) qui est tourné vers le côté frontal du fond de matrice (69) et des plaques de maintien (70, 71).

11. Dispositif selon la revendication 9, **caractérisé en ce qu'**une pièce de pression annulaire (68) est associée aux outillages de frappe (63) du côté de leur pied.

12. Dispositif selon la revendication 9, **caractérisé en ce que** les outillages de frappe (63) ont une forme allongée prismatique adaptée à la géométrie des dents, le côté d'appui (67) étant pourvu de saillies (73) pour supporter les plaques de maintien (70, 71) et le fond de matrice (69).

13. Procédé de fabrication de corps de couplage adaptés à des systèmes de synchronisation à partir d'un flan (8) avec un étage d'estampage (P) comportant au moins des segments d'estampage et une enclume dans lequel des creux et des toits agencés les uns à la suite des autres de manière annulaire sont directement ménagés dans le côté supérieur du flan (8), dans la zone de la circonférence proche du bord, par estampage le long d'une couronne de base et de sommet (FK, KK) des futures dents (2) resp. segments de dents, **caractérisé par** les étapes suivantes :
a) ajout de toits (11) et de creux (12) grâce à un premier estampage au cours duquel les toits (11), avec les creux (12), sont positionnés en agencement annulaire à des espacements égaux les uns par rapport aux autres, et grâce à un second estampage de toits (11) et de creux (2) succédant au premier estampage et au cours duquel les espacements dans l'agencement annulaire sont remplis par des toits et des creux, le premier et le second estampage étant exécutés dans un seul et même étage d'estampage,
b) détourage des creux (12) pour éliminer une zone de matière au niveau de leur point le plus profond à chaque fois, de manière à obtenir sans estampage, sur le côté frontal du flan (8), des corps de dent (15) le long de la couronne de base (FK) présentant des faces de dent (16.1, 16.2) et des toits,
c) pliage arrière des faces de dent (16.1, 16.2) grâce à un estampage au moyen d'outillages de frappe (62) et calibrage par frappe du profil de toit des toits à l'aide d'une enclume de calibrage (74) adaptée au profil de toit.
